# FASCICULE DE BREVET EUROPEEN

(11) **EP 1 044 541 B1**
(45) Date de publication et mention de la délivrance du brevet: **12.11.2008**
(21) Numéro de dépôt: 99941700.9
(22) Date de dépôt: 06.09.1999
(51) Int. Cl.: H04L 12/56

(54) **ROUTEUR POUR ACHEMINER DES PAQUETS DE DONNEES**
ROUTER ZUR WEGELEITUNG VON DATENPAKETEN
DATA PACKET ROUTER

(30) Priorité: 08.09.1998 FR 9811205
(43) Date de publication de la demande: 18.10.2000
(73) Titulaire: BULL SAS, 78340 Les Clayes sous Bois (FR)
(72) Inventeur: GOEURY, Alain, F-28500 Cherisy (FR)
(86) Numéro de dépôt international: PCT/FR1999/002117
(87) Numéro de publication internationale: WO 2000/014930

(56) Documents cités:
- EP-A- 0 492 026
- EP-A- 0 504 710
- US-A- 4 403 321

## Description

Le domaine de l'invention est celui de l'informatique et plus particulièrement des routeurs. Dans un système informatique, un réseau permet de relier entre eux divers équipements terminaux de traitement de données de façon à échanger de l'information au moyen de paquets de données qu'ils se transmettent.

Un routeur est un dispositif pour aiguiller les paquets de données sur le réseau dans le but de les faire parvenir à l'équipement terminal de traitement de donnée destinataire. Chaque paquet de données comporte généralement dans une entête, les moyens de reconnaître une adresse de destination qui permet au routeur d'aiguiller le paquet vers un autre routeur ou directement vers l'équipement terminal de traitement de donnée destinataire.

Certains routeurs sont de véritables ordinateurs connectés sur le réseau. De tels routeurs analysent les entêtes de paquets, stockent éventuellement les paquets jusqu'à en retransmettre tout ou partie sur le réseau en fonction de sa disponibilité. Le traitement intermédiaire par ces types de routeurs introduisent des latences parfois peu .souhaitables sur le transfert de paquets par le réseau.

Pour réduire la latence de transfert sur le réseau, des routeurs ont été conçus sous forme de circuits intégrés qui constituent des autocommutateurs avec un minimum de stockage intermédiaire.

Lorsque les équipements terminaux de traitement de données sont des ordinateurs et des périphériques, les temps de circulation des paquets de données entre équipements terminaux de traitement de données, imposés par les liaisons physiques sont relativement longs en comparaison des capacités de traitement des machines actuelles. Lorsqu'au sein d'un système informatique, les équipements terminaux de traitement de données sont des microprocesseurs, des unités de mémoire et des unités d'entrée-sortie, des temps de circulation des paquets de données entre équipements terminaux de traitement de données trop longs nuiraient aux performances du système.

Un routeur de type autocommutateur comprend généralement un nombre n d'entrées et un nombre n de sorties, destiné à acheminer des paquets de données des entrées vers les sorties. Pour constituer un réseau, des entrées et des sorties du routeur sont connectées respectivement à des sorties et à des entrées d'équipements terminaux de traitement de données ou d'autres routeurs. Un tel routeur comprend un minimum de mémoire sous forme de tampons pour accumuler momentanément des paquets de données lorsque les sorties ne peuvent absorber immédiatement la charge des paquets présentés sur les entrées. C'est par exemple le cas lorsqu'il s'agit d'acheminer des paquets de données présentés sur plusieurs entrées, vers une même sortie.

Un tampon constitué d'une ou plusieurs cellules, affecté spécifiquement à chaque entrée, constitue une file d'entrée. L'inconvénient d'une file d'entrée est que, lorsque la sortie vers laquelle acheminer un paquet de donnée considéré n'est pas disponible, le paquet considéré bloque l'acheminement des paquets ultérieurs qui se présentent sur la même entrée. Même s'il existe une sortie disponible pour un paquet ultérieur, ce paquet ultérieur restera indûment bloqué par le paquet considéré jusqu'à son acheminement vers une sortie disponible. Ce phénomène nuit aux performances du routeur.

Un tampon constitué d'une ou plusieurs cellules, affecté spécifiquement à chaque sortie, constitue une file de sortie. Lorsqu'une sortie vers laquelle acheminer un paquet de données considéré, n'est pas disponible, le paquet de donnée considéré est accumulé dans le tampon de sortie, en attente de libération. Ainsi, le paquet considéré ne bloque pas des paquets ultérieurs qui se présentent sur la même entrée mais sont destinés à une autre sortie. Un problème persiste lorsque plusieurs paquets considérés se présentent sur plusieurs entrées pour être acheminés simultanément vers une même sortie. Selon l'état de la technique connu, la file de sortie introduit alors un goulot d'étranglement pour l'acheminement des paquets considérés.

Une solution qui consiste à mettre aussi un tampon d'entrée pour faire attendre chaque paquet considéré pendant l'acheminement des autres paquets considérés vers le tampon de sortie, conserve l'inconvénient du phénomène des files d'entrée.

Une solution qui consiste à multiplier par le nombre n d'entrées, la fréquence de traitement du routeur par rapport à la fréquence d'arrivée des données sur les entrées, risque d'être limitée par la structure physique du routeur. Il est par exemple difficile d'obtenir des temps de cycle inférieurs à la nanoseconde en technologie CMOS 0,5 microns pour des circuits logiques complexes. Ceci entrave une fréquence d'arrivée de données sur les entrées dans les ordres de grandeur du GHz.

Une solution qui consiste à doter le routeur d'un bus de donnée avec une largeur du chemin de données égale à n fois la largeur du chemin de données sur une entrée, nécessite une gestion complexe de ce bus.

La structure divulguée par la demande EP-A-0 504 710 présente l'avantage de simplifier la structure des points de commutation par l'utilisation d'une mémoire commune, mais n'évite pas les files d'entrée ni les risques de congestion en ces points.

L'invention a pour objet un routeur comprenant un nombre n d'entrées et un nombre n de sorties, destiné à acheminer des paquets de données des entrées vers les sorties. Pour palier les inconvénients précédemment cités, le routeur selon l'invention comprend:
- un commutateur réticulaire d'acheminement constitué d'un nombre n de premières lignes d'entrées, d'un nombre n de deuxièmes lignes d'entrées, d'un nombre n de premières lignes de sortie et d'un nombre n de deuxièmes lignes de sortie, chacune des premières lignes d'entrées étant connectée respectivement à une entrée et chacune des premières lignes de sortie étant connectées respectivement à une sortie;
- une mémoire accumulatrice comprenant un nombre n d'entrées en écriture connectées chacune à l'une des deuxièmes lignes de sortie, un nombre n de sortie en lecture connectées chacune à l'une des deuxièmes lignes d'entrées et un nombre n de groupes de n cellules;
- chaque ligne de lecture permettant une extraction de paquet contenu dans un groupe de n cellules;
- chaque ligne d'écriture permettant une introduction de paquet dans l'une des cellules de chaque groupe de n cellules.

Les n deuxièmes lignes de sortie du commutateur réticulaire permettent d'acheminer un paquet de donnée considéré sur l'une de ces n deuxièmes lignes de sortie si celle des n premières lignes de sortie connectée à la sortie vers laquelle acheminer le paquet de données, n'est pas disponible. Il existe toujours au moins une ligne de sortie disponible pour chaque entrée car il existe autant de deuxième lignes de sortie que de premières lignes d'entrées. La mémoire accumulatrice permet de conserver le paquet de données jusqu'à ce que la ligne de sortie redevienne disponible, tant que sa capacité le permet. Les n deuxièmes lignes d'entrée du commutateur réticulaire permettent d'acheminer le paquet considéré vers la sortie dès que la ligne de sortie redevient disponible. Il existe toujours au moins une ligne d'entrée disponible pour chaque sortie car il existe autant de deuxième lignes d'entrée que de premières lignes de sortie. La possibilité d'extraire les paquets d'un groupe de cellule par une ligne de lecture connectée à l'une des deuxièmes lignes d'entrée donne au groupe de cellules les avantages d'une file de sortie. La possibilité d'introduire un paquet dans le groupe de cellules par chaque ligne d'écriture connectée à une deuxième ligne de sortie résorbe considérablement le goulot d'étranglement qui existe pour les files de sortie antérieurement connues.

D'autres caractéristiques intéressantes sont enseignées par une mise en oeuvre préférée de l'invention, décrite à présent en référence aux figures où :
- la figure 1 représente un réseau réticulaire de routeur selon l'invention ;
- la figure 2 représente une mémoire accumulatrice selon l'invention ;
- la figure 3 représente un premier organe pour commuter le réseau réticulaire sur des sorties du routeur;
- la figure 4 représente un deuxième organe pour commuter le réseau réticulaire sur la mémoire accumulatrice;
- la figure 5 représente un réseau réticulaire de commande;
- la figure 6 représente des détails supplémentaires du deuxième organe;
- la figure 7 représente un troisième organe pour générer des commandes d'écriture dans la mémoire accumulatrice;
- la figure 8 représente un quatrième organe pour générer des commandes de lecture dans la mémoire accumulatrice;
- les figures 9 et 10 représentent des circuits d'arbitrage;
- la figure 11 représente des détails supplémentaires du premier organe.

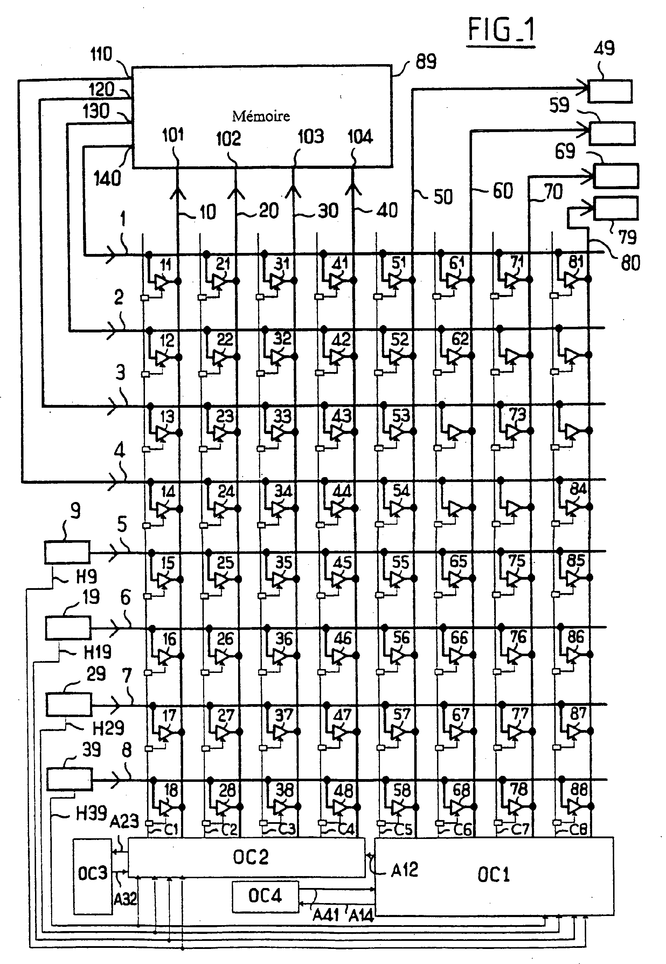

En référence à la figure 1, un routeur comprenant un nombre n d'entrées 9, 19, 29, 39 et un nombre n de sorties 49, 59, 69, 79, est destiné à acheminer des paquets de données des entrées 9, 19, 29, 39 vers les sorties 49, 59, 69, 79. Le routeur comprend :
- un commutateur réticulaire d'acheminement constitué d'un nombre n de premières lignes d'entrées 5, 6, 7, 8, d'un nombre n de deuxièmes lignes d'entrées 1, 2, 3, 4, d'un nombre n de premières lignes de sortie 50, 60, 70, 80 et d'un nombre n de deuxièmes lignes de sortie 10, 20, 30, 40;
- une mémoire 89 comprenant un nombre n d'entrées en écriture 101, 102, 103, 104 connectées chacune à l'une des deuxièmes lignes de sortie 10, 20, 30, 40 et un nombre n de sorties en lecture 110, 120, 130, 140 connectées chacune à l'une des deuxièmes lignes d'entrées 1, 2, 3, 4.

Chacune des premières lignes d'entrées 5, 6, 7, 8 est connectée respectivement à une entrée 9, 19, 29, 39 et chacune des premières lignes de sortie 50, 60, 70, 80 est connectées respectivement à une sortie 49, 59, 69, 79.

Chaque ligne repérée i , i variant de 1 à 2n, est commutable sur une ligne repérée j0, j variant de 1 à 2n, au moyen d'un interrupteur commandé repéré ji. Par exemple l'interrupteur 51 permet de commuter la ligne d'entrée 1 sur la ligne de sortie 50, l'interrupteur 15 permet de commuter la ligne d'entrée 5 sur la ligne de sortie 10. Le commutateur réticulaire comprend ainsi 2n fois 2n interrupteurs ij. Sur les figures ici représentées, la valeur de n est quatre, cependant les explications restent valables pour toute valeur de n.

Un premier organe de commande OC1 permet de commander les interrupteurs 51 à 58 au moyen d'un signal C5, les interrupteurs 61 à 68 au moyen d'un signal C6, les interrupteurs 71 à 78 au moyen d'un signal C7 et les interrupteurs 81 à 88 au moyen d'un signal C8.

Un deuxième organe de commande OC2 permet de commander les interrupteurs 11 à 18 au moyen d'un signal C1, les interrupteurs 21 à 28 au moyen d'un signal C2, les interrupteurs 31 à 38 au moyen d'un signal C3 et les interrupteurs 41 à 48 au moyen d'un signal C4.

Chacun des n signaux C1 à C4 et des n signaux C5 à C8 est codé sur autant de brins conducteurs que nécessaire de façon à rendre passant au plus un interrupteur sur une même ligne de sortie pour éviter tout court-circuit entre les lignes d'entrées.

Chaque paquet de données présenté sur les entrées 9, 19, 29, 39 du routeur comprend une entête (header en anglais) qui indique la ou les sorties 49, 59, 69, 79 vers laquelle ou lesquelles acheminer le paquet de données. A chaque fois qu'un paquet de données se présente sur l'entrée 9, 19, 29, 39, son entête respective H9, H19, H29, H39 est lue par les organes OC1 et OC2. Chaque paquet de données comprend aussi une indication de fin de paquet qui permet de remettre à zéro le signal C5, C6, C7, C8 par l'organe OC1 lorsque l'organe OC1 détecte une fin de paquet sur la ligne 50, 60, 70, 80 respective et le signal C1, C2, C3, C4 par l'organe OC2 lorsque l'organe OC2 détecte une fin de paquet sur la ligne 10, 20, 30, 40 respective.

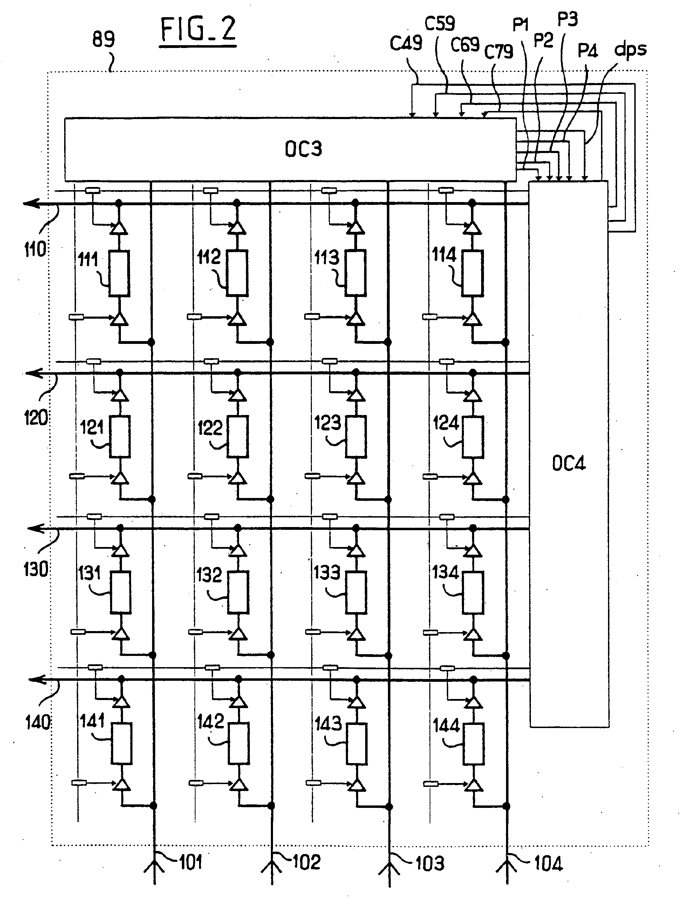

L'organe de commande OC1 reçoit un signal A41 en provenance d'un quatrième organe de commande OC4 dont les fonctionalités seront décrites en référence à la figure 2. Le signal A41 code des demandes de commutation de la ligne 1 sur la ligne 50, de la ligne 2 sur la ligne 60, de la ligne 3 sur la ligne 70, de la ligne 4 sur la ligne 80. Le signal A41 est par exemple un mot de n bits dont le rang correspond à un indice de ligne d'entrée et dont la mise à un d'un bit indique une demande de commutation. L'organe OC1 envoie un signal A14 à l'organe OC4 pour acquitter le signal A41. L'organe de commande OC1 envoie un signal A12 à l'organe OC2 pour lui indiquer les entrées 9, 19, 29, 39 prises en charge par l'organe OC1. Le signal A12 est par exemple un mot de n bits, correspondant chacun à une entrée et dont l'état haut d'un bit indique que l'entrée correspondante est prise en charge par l'organe OC1.

L'organe OC2 envoie un signal A23 à destination d'un troisième organe de commande OC3 dont les fonctionalités sont décrites en référence à la figure 2. Le signal A23 code des adresses de cellules de la mémoire accumulatrice 89 à remplir. Le signal A23 est par exemple un mot de n champs, chaque champ correspondant à une ligne de sortie 10, 20, 30, 40. L'organe OC2 reçoit un signal A32 en provenance de l'organe OC3 pour coder des adresses de cellules disponibles de la mémoire accumulatrice 89.

En référence à la figure 2, la mémoire 89 comprend n cellules 111 à 114 accessibles en lecture par la première sortie en lecture 110, n cellules 121 à 124 accessibles en lecture par la sortie suivante en lecture 120, n cellules 131 à 134 accessibles en lecture par la (n-1)ième sortie en lecture 130 et n cellules 141 à 144 accessibles en lecture par la (n)ième sortie en lecture 140. Pour chaque groupe de cellules accessibles en lecture par une sortie 110, 120, 130, 140, il existe une cellule 111, 121, 131, 141 accessible en écriture par l'entrée en écriture 101, une cellule 112, 122, 132, 142 accessible en écriture par l'entrée en écriture 102, une cellule 113, 123, 133, 143 accessible en écriture par l'entrée en écriture 103, une cellule 114, 124, 134, 144 accessible en écriture par l'entrée en écriture 104.

L'organe de commande OC3 commande l'écriture dans l'une des cellules 111, 121, 131, 141 au moyen d'un signal A231, dans l'une des cellules 112, 122, 132, 142 au moyen d'un signal A232, dans l'une des cellules 113, 123, 133, 143 au moyen d'un signal A233, dans l'une des cellules 114, 124, 134, 144 au moyen d'un signal A234, dès qu'il détecte une entête de paquet respectivement sur l'entrée en écriture 101, 102, 103, 104.

L'organe OC4 commande une lecture séquentielle des cellules non vides parmi le groupe de n cellules 111 à 114 dès que le signal A41 indique que la sortie 49 est disponible, une lecture séquentielle des cellules non vides parmi le groupe de n cellules 121 à 124 dès que le signal A41 indique que la sortie 59 est disponible, une lecture séquentielle des cellules non vides parmi le groupe de n cellules 131 à 134 dès que le signal A41 indique que la sortie 69 est disponible, une lecture séquentielle des cellules non vides parmi le groupe de n cellules 141 à 144 dès que le signal A41 indique que la sortie 79 est disponible.

Le fonctionnement des organes OC1, OC2, OC3, OC4 est rythmé par une horloge commune dont chaque cycle comprend un état haut suivi d'un état bas. Dès que les organes OC1 et OC2 détectent une entête H9 d'un nouveau paquet de données qui se présente sur l'entrée 9, les organes OC1 et OC2 décodent l'entête H9 sur l'état haut d'un premier cycle d'horloge CK1, de façon à déterminer chacun indépendamment une sortie destinatrice du paquet parmi les sorties 49, 59, 69, 79 disponibles.

Dans le cas d'une circulation de paquets de type ver de terre (wormhole en anglais), c'est à dire de transmission de paquets à la suite les uns des autres, la sortie 49, respectivement 59, 69, 79, est considérée disponible lorsqu'il n'existe aucune circulation de paquet sur la ligne 50, respectivement 60, 70, 80 correspondante et que ladite ligne n'est pas réservée.

Si l'organe OC1 détermine une sortie parmi les sorties disponibles, l'organe OC1 déclenche sa prise en charge de l'entrée 9 sur l'état bas du premier cycle d'horloge CK1 de façon à commander le transfert du paquet de l'entrée 9 vers la sortie déterminée. Par exemple, si la sortie déterminée par l'organe OC1 est la sortie 59, l'organe OC1 réserve la ligne de sortie 60, commute la ligne d'entrée 5 sur la ligne de sortie 60 au moyen du signal C6 et déclenche la lecture de l'entrée 9 jusqu'à détection de la fin du paquet qui termine la circulation du paquet sur la ligne de sortie 60, et réinitialise la réservation de ligne correspondante par l'entrée 9. En déclenchant sa prise en charge de l'entrée 9, l'organe OC1 met à l'état haut le bit du mot A12 correspondant à l'entrée 9. Ce bit du mot A12 est remis à l'état bas par l'organe OC1 au plus tard lorsque l'entête quitte l'entrée 9 pour être acheminée à travers le réseau réticulaire.

Si l'organe OC1 ne peut pas déterminer de sortie parmi les sorties disponibles, l'organe OC1 ne prend pas en charge l'entrée 9 et met donc le bit correspondant du mot A12 à l'état bas.

A chaque sortie 49, 59, 69, 79 déterminée par l'organe OC2 correspond respectivement une ligne de lecture 110, 120, 130, 140 de la mémoire 89. En déterminant une sortie à partir de l'entête H9, l'organe OC2 sélectionne en fait, indépendamment de l'organe OC1, une cellule de la mémoire 89 accessible en lecture sur la ligne de lecture 110, 120, 130, 140 correspondant à ladite sortie. Parmi le groupe de cellules accessibles en lecture sur la ligne de lecture correspondant à la sortie déterminée, la sélection est effectuée, selon un ordre de priorité fixé a priori, sur la première cellule disponible accessible en écriture par une ligne d'écriture 101, 102, 103, 104. Une cellule de la mémoire 89 est considérée disponible si elle possède la place suffisante pour accumuler un paquet de taille maximale. De façon avantageuse dans le cas de transferts de type ver de terre, une cellule peut aussi être considérée disponible si elle est en cours de lecture, c'est à dire de vidage. Une cellule de la mémoire 89 est considérée accessible en écriture si la ligne de sortie 10, 20, 30, 40 du commutateur réticulaire physiquement prolongée par la ligne d'écriture 101, 102, 103, 104 respective à laquelle ladite cellule est reliée au moyen de son interrupteur d'entrée, n'est pas déjà réservée par l'organe OC2. Par exemple, si l'organe OC2 détermine la sortie 59 pour laquelle les cellules 122, 123 et 124 sont disponibles et que seules les cellules 123 et 124 sont accessibles en écriture, l'organe OC2 réserve la ligne 30. Si de plus, sur l'état haut d'un deuxième cycle d'horloge CK2, le bit du mot A12 correspondant à l'entrée 9 n'est pas à l'état haut, l'organe OC2 commute la ligne d'entrée 5 sur la ligne de sortie 30 au moyen du signal C3, informe l'organe OC3 pour effectuer une écriture dans la cellule 123 au moyen du signal A23 et commande une lecture de l'entrée 9, ceci jusqu'à détection d'une fin de paquet qui supprime la réservation de la ligne de sortie 30.

Les explications qui précèdent en référence à l'entrée 9 sont valables pour chacune des entrées 19, 29, 39.

Un cas peut se produire où les organes OC1 et OC2 détectent sur un même premier cycle d'horloge CK1, plusieurs entêtes H9, H19, H29, H39 de nouveaux paquets de données qui se présentent simultanément sur les entrées 9, 19, 29, 39.

Si en décodant les entêtes H9, H19, H29, H39, l'organe OC1 détermine une même sortie, par exemple 69, vers laquelle transférer les paquets présentés sur les entrées 9, 19, 29, l'organe OC1 retient au plus une entrée, par exemple l'entrée 19, selon un ordre de priorité tournante de façon à ne favoriser en moyenne aucune entrée par rapport aux autres. L'organe OC1 prend en charge l'entrée 19 comme expliqué ci-dessus et met à l'état haut le bit du mot A12 correspondant à l'entrée 19 et laisse les autres bits du mot A12 à l'état bas.

Si en décodant les entêtes H9, H19, H29, H39, l'organe OC2 détermine une même sortie, par exemple 69, vers laquelle transférer les paquets présentés sur les entrées 9, 19, 29, l'organe OC2 sélectionne une cellule de la mémoire 89 accessible en lecture comme expliqué précédemment. Parmi les entrées 9, 29 dont le bit correspondant du mot A12 est à l'état bas, l'organe OC2 retient au plus une entrée, par exemple l'entrée 29, selon un ordre de priorité tournante de façon à ne favoriser en moyenne aucune entrée par rapport aux autres. L'organe OC2 prend ensuite en charge l'entrée 29 comme expliqué précédemment et met le bit correspondant du mot A12 à l'état haut. L'organe OC2 répète les opérations précédentes sur deux cycles d'horloge tant que des bits du mot A12 sont à l'état bas. De cette manière, le paquet de données présenté sur l'entrée 9 est écrit dans une cellule de la mémoire 89, deux cycles d'horloge après le paquet de données présenté sur l'entrée 29. L'organe OC2 établit un ordre d'écriture dans la mémoire 89, même pour des paquets présentés simultanément en entrée. Le retard de deux cycles d'horloge ainsi artificiellement provoqué sur le transfert d'un paquet, est négligeable devant le nombre de cycles d'horloge nécessaire à la circulation d'un paquet vers une sortie. Ce retard de deux ou au plus (n-1) fois deux cycles d'horloge ne provoque pas de retard supplémentaire sur le transfert d'un paquet vers une sortie, par rapport à l'attente nécessaire à un paquet sur la fin du transfert d'un paquet précédent vers la même sortie. Ce mécanisme permet d'instaurer un ordre de traitement de paquets présentés simultanément, qui conserve l'ordre de présentation des paquets présentés successivement.

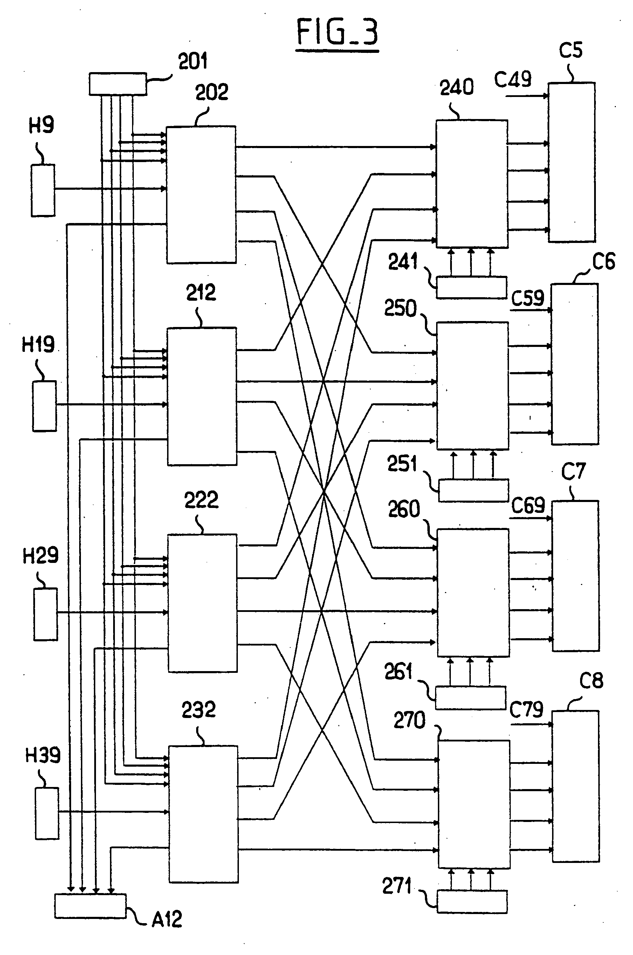

La figure 3 présente un schéma d'élaboration des signaux C5 à C8 dans l'organe OC1. L'organe OC1 dispose d'un mot 201 d'état des sorties. Le mot 201 est un mot de n bits affectés chacun à une sortie, dont l'état haut indique que la sortie correspondante 49, 59, 69, 79, est disponible. A chaque entrée 9, 19, 29, 39, est associé respectivement un bloc combinatoire 202, 212, 222, 232. A chaque sortie 49, 59, 69, 79, est associé respectivement un bloc combinatoire 240, 250, 260, 270.

Lorsque le bloc combinatoire 202 reçoit une entête H9 de paquet de données sur l'état haut d'un premier cycle d'horloge CK1, il analyse l'entête H9 en en combinant les données avec l'état du mot 201, de façon à déterminer une sortie vers laquelle acheminer le paquet de données. Si le bloc 202 détermine la sortie 49, il met à l'état haut un signal à destination du bloc 240, automaintenu pendant l'état bas du premier cycle d'horloge CK1. Si le bloc 202 détermine la sortie 59, il met à l'état haut un signal à destination du bloc 250, automaintenu pendant l'état bas du premier cycle d'horloge CK1. Si le bloc 202 détermine la sortie 69, il met à l'état haut un signal à destination du bloc 260, automaintenu pendant l'état bas du premier cycle d'horloge CK1. Si le bloc 202 détermine la sortie 79, il met à l'état haut un signal à destination du bloc 270, automaintenu pendant l'état bas du premier cycle d'horloge CK1. Simultanément, le bloc 202 met à l'état haut le bit du signal A12 correspondant à l'entrée 9 pour indiquer sa prise en charge par l'organe OC1. Si le bloc 202 ne détermine aucune sortie, il met à l'état bas le bit du signal A12 correspondant à l'entrée 9 pour indiquer son absence de prise en charge par l'organe OC1.

Les explications qui précèdent pour le bloc 202 restent valables pour chacun des blocs 212, 222, 232, en remplaçant l'entête H9 respectivement par l'entête H19, H29, H39, l'entrée 9 respectivement par l'entrée 19, 29,

Sur l'état bas du premier cycle d'horloge CK1, le bloc 240 retient parmi les signaux en provenance des blocs 202, 212, 222, 232, au plus un état haut qu'il retranscrit dans le signal C5. Simultanément, le bloc 240 met à jour le mot d'état 201 en positionnant à l'état bas le bit correspondant à la sortie 49, alors indisponible pour des requêtes ultérieures jusqu'à détection d'une fin de paquet. Si l'état haut du signal retenu est celui en provenance du bloc 202, le signal C5 rend passant l'interrupteur 55. Si l'état haut du signal retenu est celui en provenance du bloc 212, le signal C5 rend passant l'interrupteur 56. Si l'état haut du signal retenu est celui en provenance du bloc 222, le signal C5 rend passant l'interrupteur 57. Si l'état haut du signal retenu est celui en provenance du bloc 232, le signal C5 rend passant l'interrupteur 58. Si un signal C49 en provenance de l'organe OC4 est à l'état haut, le signal C49 est prioritaire sur les sorties du bloc 240 et le signal C5 rend passant l'interrupteur 51.

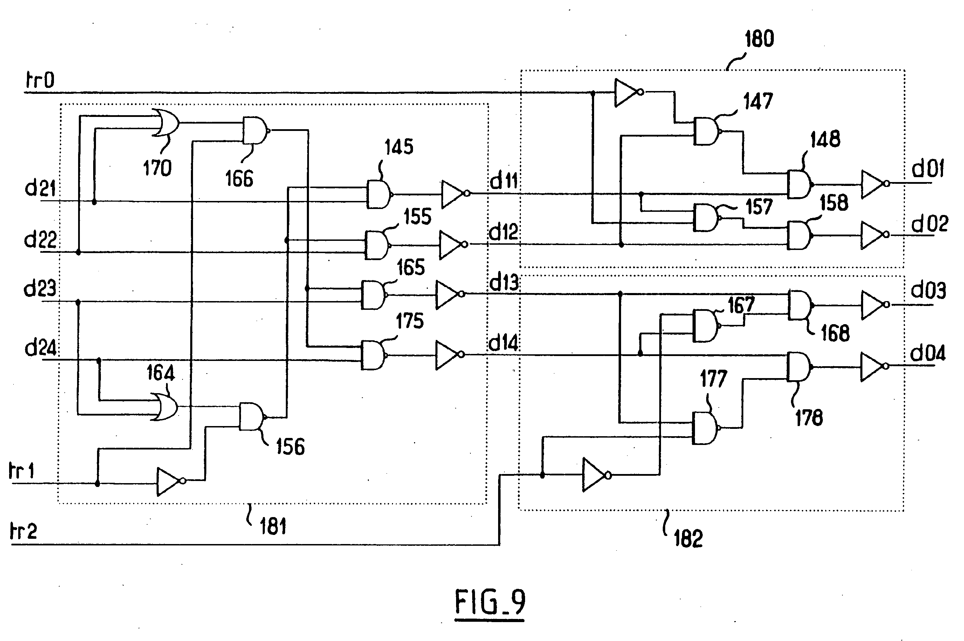

Pour retenir au plus un état haut parmi les signaux en provenance des blocs 202, 212, 222, 232, le bloc 240 est constitué d'un circuit d'arbitrage expliqué par la suite plus en détails en référence à la figure 9. Le bloc 240 dispose à ce titre d'un compteur 241 dont le contenu est un ordre de priorité d'arbitrage. Le compteur 241 est incrémenté par chaque nouvel état haut retenu de façon à établir un ordre de priorité d'arbitrage tournant et à ne favoriser ainsi aucune entrée par rapport aux autres.

Les explications qui précèdent pour le bloc 240 restent valables pour chacun des blocs 250, 260, 270, en remplaçant la sortie 49 respectivement par la sortie 59, 69, 79, le signal C49 respectivement par un signal C59, C69, C79, les interrupteurs 55 à 58 respectivement par les interrupteurs 65 à 68, 75 à 78, 85 à 88, l'interrupteur 51 respectivement par l'interrupteur 62, 73, 84, le compteur 241 respectivement par le compteur 251, 261, 271, le signal C5 respectivement par le signal C6, C7, C8.

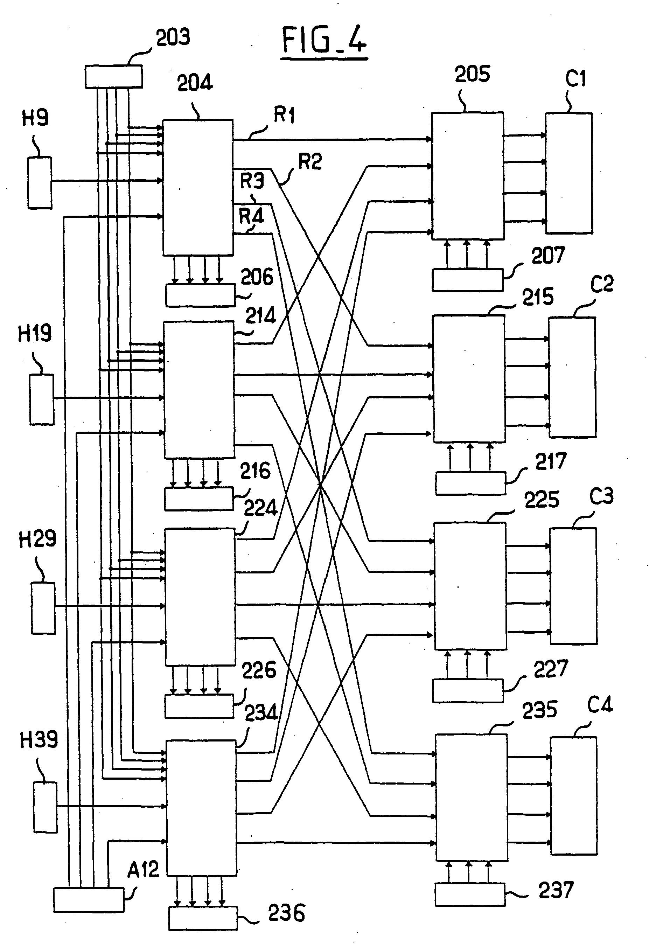

La figure 4 présente un schéma d'élaboration des signaux C1 à C4 dans l'organe OC2. L'organe OC2 dispose d'un mot 203 d'état de la mémoire accumulatrice 89. Le mot 203 est un mot de (n+1) fois n bits. Sur la figure 4, seulement n conducteurs issus du mot 203 sont représentés de façon à ne pas surcharger inutilement la figure, il faut considérer que chaque conducteur représenté est constitué de (n+1) brins pour véhiculer chacun un bit du mot 203. Pour chaque ligne d'écriture 101, 102, 103, 104, un bit indique l'accessibilité à la mémoire 89 par la ligne correspondante et n bits indiquent les cellules de la mémoire 89 disponibles commutables sur la ligne correspondante, c'est à dire l'état des cellules 111, 121, 131, 141 pour la ligne 101, l'état des cellules 112, 122, 132, 142 pour la ligne 102, l'état des cellules 113, 123, 133, 143 pour la ligne 103, l'état des cellules 114, 124, 134, 144 pour la ligne 104. Chaque ligne 101, 102, 103, 104, étant dans le prolongement respectif d'une ligne de sortie 10, 20, 30, 40, l'accessibilité par une ligne d'écriture 101, 102, 103, 104, est donnée par le fait que la ligne de sortie correspondante 10, 20, 30, 40, n'est pas réservée pour véhiculer un paquet de données. La disponibilité des cellules est donnée par le signal A32.

A chaque entrée 9, 19, 29, 39, est associé respectivement un bloc combinatoire 204, 214, 224, 234. A chaque ligne de sortie 10, 20, 30, 40, est associé respectivement un bloc combinatoire 205, 215, 225, 235.

Lorsque le bloc combinatoire 204 reçoit une entête H9 de paquet de données sur l'état haut d'un premier cycle d'horloge CK1, il analyse l'entête H9 en en combinant les données avec l'état du mot 203, de façon à déterminer une file de sortie vers laquelle et une ligne de sortie par laquelle acheminer le paquet de données. La file de sortie déterminée est codée dans un mot 206 de n bits, chaque bit correspondant à une ligne de lecture 110, 120, 130, 140 de la mémoire 89. Sur l'état bas du premier cycle d'horloge CK1, la ligne de sortie déterminée est validée si et seulement si le bit du mot A12 correspondant à l'entrée 9 est à l'état bas. Si le bloc 204 détermine la ligne de sortie 10, il met à l'état haut un signal R1 à destination du bloc 205, automaintenu pendant l'état haut d'un deuxième cycle d'horloge CK2. Si le bloc 204 détermine la ligne de sortie 20, il met à l'état haut un signal R2 à destination du bloc 215, automaintenu pendant l'état haut du deuxième cycle d'horloge CK2. Si le bloc 205 détermine la ligne de sortie 30, il met à l'état haut un signal R3 à destination du bloc 225, automaintenu pendant l'état haut du deuxième cycle d'horloge CK2. Si le bloc 205 détermine la ligne de sortie 40, il met à l'état haut un signal R4 à destination du bloc 235, automaintenu pendant l'état haut du deuxième cycle d'horloge CK2.

Les explications qui précèdent pour le bloc 204 restent valables pour chacun des blocs 214, 224, 234, en remplaçant l'entête H9 respectivement par l'entête H19, H29, H39, l'entrée 9 respectivement par l'entrée 19, 29, 39, le mot 206 respectivement par le mot 216, 226, 236.

Sur l'état haut d'un deuxième cycle d'horloge CK2, le bloc 205 retient parmi les signaux en provenance des blocs 204, 214, 224, 234, au plus un état haut qu'il retranscrit dans le signal C1. Sur l'état bas du deuxième cycle d'horloge CK2, le bloc 205 met à l'état haut le bit du mot A12 correspondant à l'entrée retenue. Simultanément, le bloc 205 met à jour le mot d'état 203 en positionnant à l'état bas le bit correspondant à la ligne de sortie 10, alors indisponible pour des requêtes ultérieures jusqu'à détection d'une fin de paquet. Si l'état haut du signal retenu est celui en provenance du bloc 204, le signal C1 rend passant l'interrupteur 15. Si l'état haut du signal retenu est celui en provenance du bloc 214, le signal C1 rend passant l'interrupteur 16. Si l'état haut du signal retenu est celui en provenance du bloc 224, le signal C1 rend passant l'interrupteur 17. Si l'état haut du signal retenu est celui en provenance du bloc 234, le signal C1 rend passant l'interrupteur 18.

Pour retenir au plus un état haut parmi les signaux en provenance des blocs 204, 214, 224, 234, le bloc 205 est constitué d'un circuit d'arbitrage expliqué par la suite plus en détails en référence à la figure 9. Le bloc 205 dispose à ce titre d'un compteur 207 dont le contenu est un ordre de priorité d'arbitrage. Le compteur 207 est incrémenté par chaque nouvel état haut retenu de façon à établir un ordre de priorité d'arbitrage tournant et à ne favoriser ainsi aucune entrée par rapport aux autres.

Les explications qui précèdent pour le bloc 205 restent valables pour chacun des blocs 215, 225, 235, en remplaçant la ligne de sortie 10 respectivement par la ligne de sortie 20, 30, 40, les interrupteurs 15 à 18 respectivement par les interrupteurs 25 à 28, 35 à 38, 45 à 48, le compteur 207 respectivement par le compteur 217, 227, 237, le signal C1 respectivement par le signal C2, C3, C4.

A chaque cycle d'horloge CK1 suivant un cycle d'horloge CK2, les opérations précédemment expliquées se répètent pour chaque entrée dont le bit correspondant du mot A12 n'a pas été mis à l'état haut après détection d'une entête qui le met systématiquement à zéro, tant que l'entête est présente sur l'entrée correspondante.

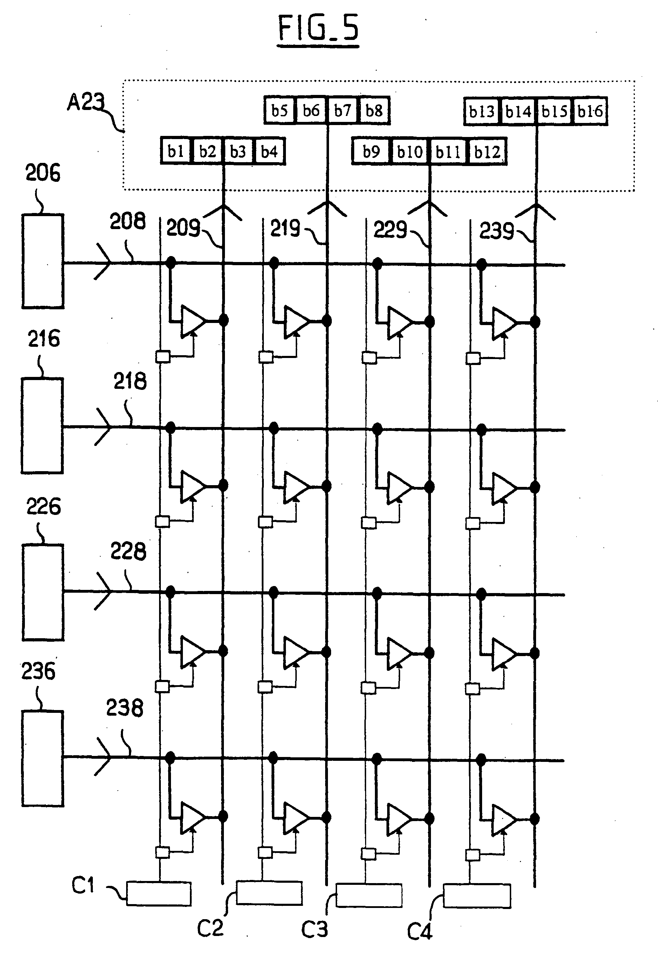

D'autre part, l'organe de commande OC2 comprend un réseau réticulaire de commande représenté en référence à la figure 5. Le réseau réticulaire de commande est une image de la partie du réseau réticulaire d'acheminement constituée des n lignes d'entrée 5 à 8 et des n lignes de sortie 10, 20, 30, 40 en référence à la figure 1. De façon identique à cette partie du réseau réticulaire d'acheminement, le réseau réticulaire de commande est commandé par les signaux C1 à C4.

Le réseau réticulaire de commande est constitué de n lignes d'entrée 208, 218, 228, 238 et de n lignes de sortie 209, 219, 229, 239. Le réseau réticulaire de commande reçoit sur la ligne d'entrée 208 la valeur du mot 206, sur la ligne d'entrée 218 la valeur du mot 216, sur la ligne d'entrée 228 la valeur du mot 226, sur la ligne d'entrée 238 la valeur du mot 236, tels que générés par l'organe OC2 en référence à la figure 4. Chacune des lignes 208, 218, 228, 238, 209, 219, 229, 239 est constituée d'autant de brins que nécessaires pour coder lesquels des bits des mots 206, 216, 226, 236 sont à l'état haut. La ligne de sortie 209 est commutable sur l'une des lignes 208, 218, 228, 238 par le signal C1 au moyen d'interrupteurs similaires aux interrupteurs 15 à 18 du réseau réticulaire d'acheminement. La ligne de sortie 219 est commutable sur l'une des lignes 208, 218, 228, 238 par le signal C2 au moyen d'interrupteurs similaires aux interrupteurs 25 à 28 du réseau réticulaire d'acheminement. La ligne de sortie 229 est commutable sur l'une des lignes 208, 218, 228, 238 par le signal C3 au moyen d'interrupteurs similaires aux interrupteurs 35 à 38 du réseau réticulaire d'acheminement. La ligne de sortie 239 est commutable sur l'une des lignes 208, 218, 228, 238 par le signal C4 au moyen d'interrupteurs similaires aux interrupteurs 45 à 48 du réseau réticulaire d'acheminement.

La sortie du commutateur réticulaire de commande génère le signal A23 dont chacun des n fois n bits b1 à b16 est destiné à commander l'écriture dans une cellule de la mémoire accumulatrice 89.

La valeur du mot 206 code une file de sortie sélectionnée par le bloc 204, c'est à dire le groupe de cellule 111 à 114, 121 à 124, 131 à 134, 141 à 144 correspondant à cette file de sortie.
- Lorsque le signal C1 commute la ligne d'entrée 5 sur la ligne de sortie 10 du réseau réticulaire d'acheminement, le signal C1 commute la ligne d'entrée 208 sur la ligne de sortie 209 du réseau réticulaire de commande. La valeur du mot 206 est transférée dans le groupe de bit b1 à b4 dont le bit à l'état haut commande une écriture dans celle des cellules 111, 121, 131, 141, correspondant à la file de sortie sélectionnée pour l'entrée 9.
- Lorsque le signal C2 commute la ligne d'entrée 5 sur la ligne de sortie 20 du réseau réticulaire d'acheminement, le signal C2 commute la ligne d'entrée 208 sur la ligne de sortie 219 du réseau réticulaire de commande. La valeur du mot 206 est transférée dans le groupe de bit b5 à b8 dont le bit à l'état haut commande une écriture dans celle des cellules 112, 122, 132, 142, correspondant à la file de sortie sélectionnée pour l'entrée 9.
- Lorsque le signal C3 commute la ligne d'entrée 5 sur la ligne de sortie 30 du réseau réticulaire d'acheminement, le signal C3 commute la ligne d'entrée 208 sur la ligne de sortie 229 du réseau réticulaire de commande. La valeur du mot 206 est transférée dans le groupe de bit b9 à b12 dont le bit à l'état haut commande une écriture dans celle des cellules 113, 123, 133, 143, correspondant à la file de sortie sélectionnée pour l'entrée 9.
- Lorsque le signal C4 commute la ligne d'entrée 5 sur la ligne de sortie 40 du réseau réticulaire d'acheminement, le signal C4 commute la ligne d'entrée 208 sur la ligne de sortie 239 du réseau réticulaire de commande. La valeur du mot 206 est transférée dans le groupe de bits b13 à b16 dont le bit à l'état haut commande une écriture dans celle des cellules 114, 124, 134, 144, correspondant à la file de sortie sélectionnée pour l'entrée 9.
Les explications qui précèdent pour l'entrée 9 et la ligne d'entrée 5 restent valables pour l'entrée 19 et la ligne d'entrée 6, pour l'entrée 29 et la ligne d'entrée 7, pour l'entrée 39 et la ligne d'entrée 8 en remplaçant le mot 206 respectivement par le mot 216, 226, 236 et en remplaçant la ligne d'entrée 208 respectivement par la ligne d'entrée 218, 228, 238.

Ainsi par exemple, si la file de sortie correspondant à la ligne de lecture 130 de la mémoire 89 est sélectionnée par le mot 216 pour l'entrée 19 et si la ligne de sortie 40 est commutée sur la ligne d'entrée 6 du commutateur réticulaire d'acheminement, le bit b15 du signal A23 est mis à l'état haut. Le paquet de données présenté sur l'entrée 19 du routeur est écrit dans la cellule 134 de la mémoire 89.

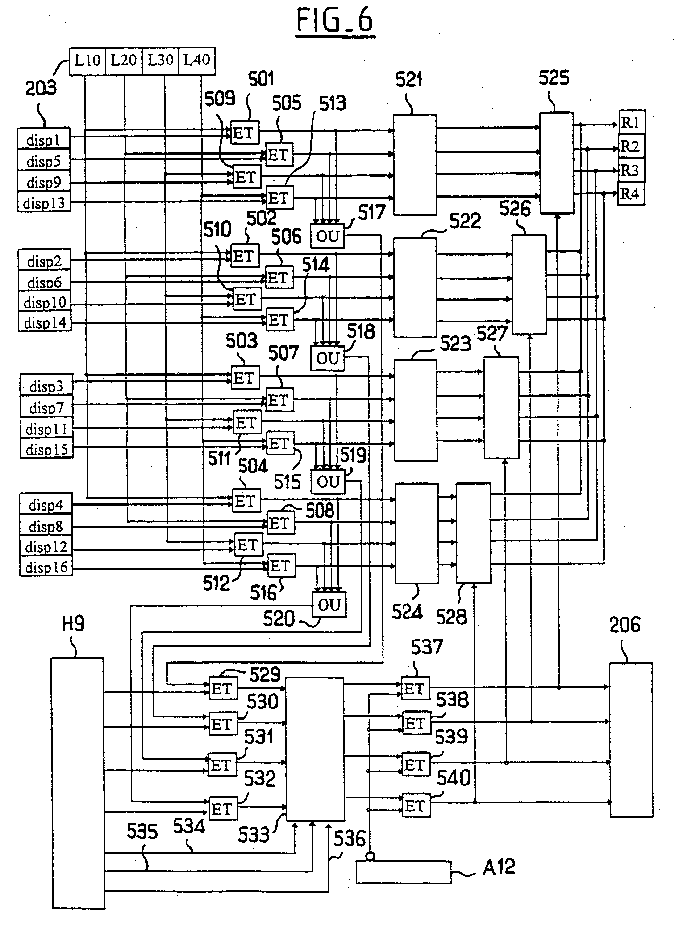

Chaque bloc combinatoire 204, 214, 224, 234 comprend les éléments décrits à présent en référence à la figure 6. Par exemple le bloc combinatoire 204 reçoit en entrée le contenu du mot 203 indiquant l'accessibilité à la mémoire 89 et le contenu de l'entête H9 pour élaborer en sortie les requêtes d'accès R1, R2, R3, R4 à la mémoire 89 et le mot de commande d'écriture 206 dans la mémoire 89, ceci sur l'état haut du premier cycle d'horloge CK1. Le mot 203 contient l'état de disponibilité disp1 à disp16 des cellules de la mémoire 89 et l'état de disponibilité L10 à L40 des lignes de sortie 10, 20, 30, 40.

Une porte 501 indique que la cellule 111 est disponible (bit disp1) et que la ligne 10 est libre (bit L10). Une porte 505 indique que la cellule 112 est disponible (bit disp5) et que la ligne 20 est libre (bit L20). Une porte 509 indique que la cellule 113 est disponible (bit disp5) et que la ligne 30 est libre (bit L30). Une porte 513 indique que la cellule 114 est disponible (bit disp13) et que la ligne 40 est libre (bit L40). Une porte 517 indique que le résultat d'au moins une porte 501, 505, 509, 513, est à l'état haut, c'est à dire qu'il existe au moins une cellule disponible et accessible parmi le groupe de cellules 111 à 114 correspondant à la sortie 49 par la ligne de lecture 110 et la ligne d'entrée 1. Un circuit 521 reçoit en entrée le résultat de chacune des portes 501, 505, 509, 513 pour conserver en sortie au plus un état haut parmi les sorties des portes selon un ordre de priorité fixe, c'est à dire que le bloc 521 retient au plus une cellule et son chemin d'accès dans la mémoire 89. Un interrupteur logique 525 reçoit en entrée les n sorties du circuit 521 dont au plus une est donc à l'état haut.

Une porte 502 indique que la cellule 121 est disponible (bit disp2) et que la ligne 10 est libre (bit L10). Une porte 506 indique que la cellule 122 est disponible (bit disp6) et que la ligne 20 est libre (bit L20). Une porte 510 indique que la cellule 123 est disponible (bit disp10) et que la ligne 30 est libre (bit L30). Une porte 514 indique que la cellule 124 est disponible (bit disp14) et que la ligne 40 est libre (bit L40). Une porte 518 indique que le résultat d'au moins une porte 502, 506, 510, 514, est à l'état haut, c'est à dire qu'il existe au moins une cellule disponible et accessible parmi le groupe de cellules 121 à 124 correspondant à la sortie 59 par la ligne de lecture 120 et la ligne d'entrée 2. Un circuit 522, identique au circuit 521, reçoit en entrée le résultat de chacune des portes 502, 506, 510, 514 pour conserver en sortie au plus un état haut parmi les sorties des portes selon un ordre de priorité fixe, c'est à dire que le bloc 522 retient au plus une cellule et son chemin d'accès dans la mémoire 89. Un interrupteur logique 526 reçoit en entrée les n sorties du circuit 522 dont au plus une est donc à l'état haut.

Une porte 503 indique que la cellule 131 est disponible (bit disp3) et que la ligne 10 est libre (bit L10). Une porte 507 indique que la cellule 132 est disponible (bit disp7) et que la ligne 20 est libre (bit L20). Une porte 511 indique que la cellule 133 est disponible (bit disp11) et que la ligne 30 est libre (bit L30). Une porte 515 indique que la cellule 134 est disponible (bit disp15) et que la ligne 40 est libre (bit L40). Une porte 519 indique que le résultat d'au moins une porte 503, 507, 511, 515, est à l'état haut, c'est à dire qu'il existe au moins une cellule disponible et accessible parmi le groupe de cellules 131 à 134 correspondant à la sortie 69 par la ligne de lecture 130 et la ligne d'entrée 3. Un circuit 523, identique au circuit 521, reçoit en entrée le résultat de chacune des portes 503, 507, 511, 515 pour conserver en sortie au plus un état haut parmi les sorties des portes selon un ordre de priorité fixe, c'est à dire que le bloc 523 retient au plus une cellule et son chemin d'accès dans la mémoire 89. Un interrupteur logique 527 reçoit en entrée les n sorties du circuit 523 dont au plus une est donc à l'état haut.

Une porte 504 indique que la cellule 141 est disponible (bit disp4) et que la ligne 10 est libre (bit L10). Une porte 508 indique que la cellule 142 est disponible (bit disp8) et que la ligne 20 est libre (bit L20). Une porte 512 indique que la cellule 143 est disponible (bit disp12) et que la ligne 30 est libre (bit L30). Une porte 516 indique que la cellule 144 est disponible (bit disp16) et que la ligne 40 est libre (bit L40). Une porte 520 indique que le résultat d'au moins une porte 504, 508, 512, 516, est à l'état haut, c'est à dire qu'il existe au moins une cellule disponible et accessible parmi le groupe de cellules 141 à 144 correspondant à la sortie 79 par la ligne de lecture 140 et la ligne d'entrée 4. Un circuit 524, identique au circuit 521, reçoit en entrée le résultat de chacune des portes 504, 508, 512, 516 pour conserver en sortie au plus un état haut parmi les sorties des portes selon un ordre de priorité fixe, c'est à dire que le bloc 528 retient au plus une cellule et son chemin d'accès dans la mémoire 89. Un interrupteur logique 528 reçoit en entrée les n sorties du circuit 524 dont au plus une est donc à l'état haut.

Une porte 529 génère un état haut à destination d'un circuit 533 lorsque l'entête H9 indique la sortie 49 comme destination du paquet présenté en entrée 9 et qu'il existe au moins une cellule de la mémoire 89 correspondant à la sortie 49, indiquée disponible et accessible par la porte 517.

Une porte 530 génère un état haut à destination du circuit 533 lorsque l'entête H9 indique la sortie 59 comme destination du paquet présenté en entrée 9 et qu'il existe au moins une cellule de la mémoire 89 correspondant à la sortie 59, indiquée disponible et accessible par la porte 518.

Une porte 531 génère un état haut à destination du circuit 533 lorsque l'entête H9 indique la sortie 69 comme destination du paquet présenté en entrée 9 et qu'il existe au moins une cellule de la mémoire 89 correspondant à la sortie 69, indiquée disponible et accessible par la porte 519.

Une porte 532 génère un état haut à destination du circuit 533 lorsque l'entête H9 indique la sortie 79 comme destination du paquet présenté en entrée 9 et qu'il existe au moins une cellule de la mémoire 89 correspondant à la sortie 79, indiquée disponible et accessible par la porte 520.

Le circuit 533 transfère le résultat de chacune des n portes 529 à 532 en entrée d'une porte 537, 538, 539, 540 en retenant au plus un état haut parmi ceux-ci. Le circuit 533 sélectionne ainsi au plus un groupe de cellules de la mémoire 89 correspondant à une sortie de destination proposée par l'entête H9. Pour ce faire, le circuit 533 est éventuellement pilotable par des signaux 534, 535, 536 en provenance de l'entête H9.

Chacune des portes 537 à 540 reçoit également en entrée l'état complémentaire du bit du signal A12 correspondant à l'entrée 9 ici considérée. Les n portes 537 à 540 valident ainsi un état haut retenu par le circuit 533 si et seulement si le bit du signal A12 n'est pas à l'état haut, c'est à dire si l'entrée 9 n'a pas été retenue par le bloc 202 de l'organe OC1. De façon à ce que l'état du bit du signal A12 soit établi, la validation par les portes 537 à 539 est faite sur un état de cycle d'horloge suivant l'état haut de premier cycle d'horloge CK1. La sortie de chaque porte 537, 538, 539, 540 constitue le bit du mot 206 correspondant à une demande d'écriture respectivement dans le groupe de cellule 111 à 114, 121 à 124, 131 à 134, 141 à 144.

Au plus un des bits du mot 206 mis à l'état haut par le circuit 533 rend passant au plus un des interrupteurs 525 à 526 correspondant à ce bit. L'interrupteur 525 est rendu passant par le bit correspondant à la sortie 49. L'interrupteur 526 est rendu passant par le bit correspondant à la sortie 59. L'interrupteur 527 est rendu passant par le bit correspondant à la sortie 69. L'interrupteur 528 est rendu passant par le bit correspondant à la sortie 79. Ainsi, l'état de chacun des n bits résultant du circuit 521, 522, 523, 524 correspondant à l'interrupteur 525, 526, 527, 528, rendu passant est retranscrit respectivement dans chacun des n signaux de requêtes R1 à R4.

Les explications qui précèdent restent valables pour chacune des entrées 19, 29, 39 en remplaçant l'entête H9 respectivement par l'entête H19, H29, H39, le mot 206 respectivement par le mot 216, 226, 236.

Le traitement du mot 203 par un premier ensemble de composants constitués des portes 501 à 520 et des circuits 521 à 524 est identique pour toutes les entrées du routeur. Il est possible de regrouper ces composants dans une fonction commune et de distribuer les signaux générés vers un deuxième ensemble de composants constitués des portes 529 à 532, des interrupteurs 525 à 528 et du circuit 533 qui est propre à chaque entrée. Le deuxième ensemble est dupliqué à l'identique dans chaque bloc 204, 214, 224, 234. Une duplication du premier ensemble de composant dans chaque bloc 204, 214, 224, 234, permet de réduire le nombre de connexions entre blocs.

On remarque que la totalité des cellules de la mémoire 89 est accessible par chaque entrée de façon indépendante.

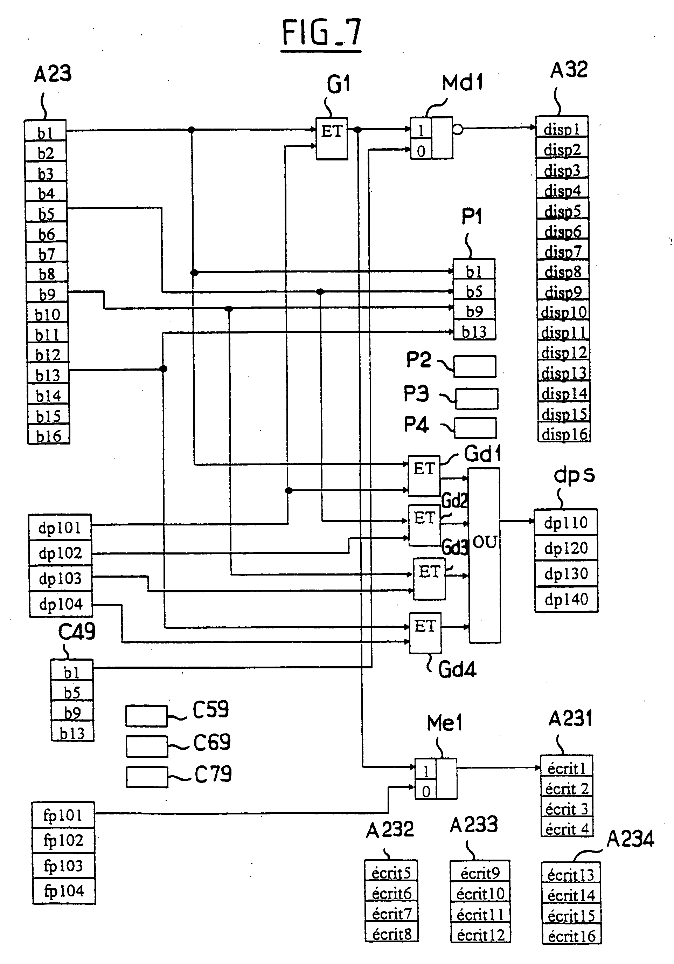

La figure 7 est une représentation schématique du troisième organe OC3, allégée afin de ne pas surcharger inutilement la figure avec la totalité des éléments du circuit répétés de façon similaire à ceux représentés. L'organe OC3 dispose du signal A23 sous forme d'un mot de n fois n bits, par exemple b1 à b16 lorsque n est égal à quatre et de n signaux de n bits C49, C59, C69, C79 dont l'élaboration par l'organe OC4 sera expliquée en référence à la figure 4. D'autre part, l'organe OC3 détecte chaque début de paquet dp101 et chaque fin de paquet fp101 circulant sur la ligne 101, chaque début de paquet dp102 et chaque fin de paquet fp102 circulant sur la ligne 102, chaque début de paquet dp103 et chaque fin de paquet fp103 circulant sur la ligne 103, chaque début de paquet dp104 et chaque fin de paquet fp104 circulant sur la ligne 104.

L'organe OC3 génère n signaux A231, A232, A233, A234 qui commandent une écriture dans la mémoire 89 à partir de respectivement chacune des lignes 101, 102, 103, 104. D'autre part, l'organe OC3 informe l'organe OC2 de la disponibilité des cellules de la mémoire 89 au moyen du signal A32, informe l'organe OC3 de l'ordre d'écriture dans la mémoire 89 au moyens de n signaux de n bits P1, P2, P3, P4 et d'un signal de début de paquets dps.

Considérant le signal A23, chacun des n bits b1 à b4 indique une réservation de cellule respective 111, 121, 131, 141, chacun des n bits b5 à b8 indique une réservation de cellule respective 112, 122, 132, 142, chacun des n bits b9 à b12 indique une réservation de cellule respective 113, 123, 133, 143, chacun des n bits b13 à b16 indique une réservation de cellule respective 114, 124, 134, 144.

Une combinaison logique du bit b1 du signal A23 et de la détection de début de paquet dp101 obtenue au moyen d'une porte G1, indique que la cellule 111 est réservée et qu'un paquet commence à circuler sur la ligne 101. Une mise à l'état haut d'un bit écrit1 pour le signal A231 déclenche une écriture dans la cellule 111, du paquet qui circule sur la ligne 101. Cette écriture est automaintenue par une bascule Me1 jusqu'à détection d'une fin de paquet fp101 sur la ligne 101.

De façon semblable, une combinaison logique du bit b2, b3, b4 du signal A23 et de la détection de début de paquet dp101 indique que la cellule respective 121, 131, 141 est réservée et qu'un paquet commence à circuler sur la ligne 101. Une mise à l'état haut d'un bit respectif écrit2, écrit3, écrit4, pour le signal A231 déclenche une écriture respectivement dans la cellule 121, 131, 141 du paquet qui circule sur la ligne 101. Chaque écriture est automaintenue par une bascule identique à la bascule Me1 jusqu'à détection d'une fin de paquet fp101 sur la ligne 101.

Les explications qui précèdent et la structure du circuit associé pour le signal A231, restent valables pour les signaux A232, A233, A234, en y remplaçant respectivement les bits b1 à b4 par les bits b5 à b8, les bits b9 à b12, les bits b13 à b16 relatifs au signal A23, respectivement la ligne 101 par la ligne 102, la ligne 103, la ligne 104, respectivement les détection de début et de fin de paquet dp101 et df101 par les détections de début et de fin de paquet dp102 et df102, dp103 et df103, dp104 et df104, respectivement les cellules 111, 121, 131, 141 par les cellules 112, 122, 132, 142, par les cellules 113, 123, 133, 143, par les cellules 114, 124, 134, 144. A chacun des n bits écrit5 à écrit8 du signal A232, des n bits écrit9 à écrit12 du signal A233, des n bits écrit13 à écrit16 du signal A234, est associé une porte et une bascule respectivement identiques à la porte G1 et à la bascule Me1.

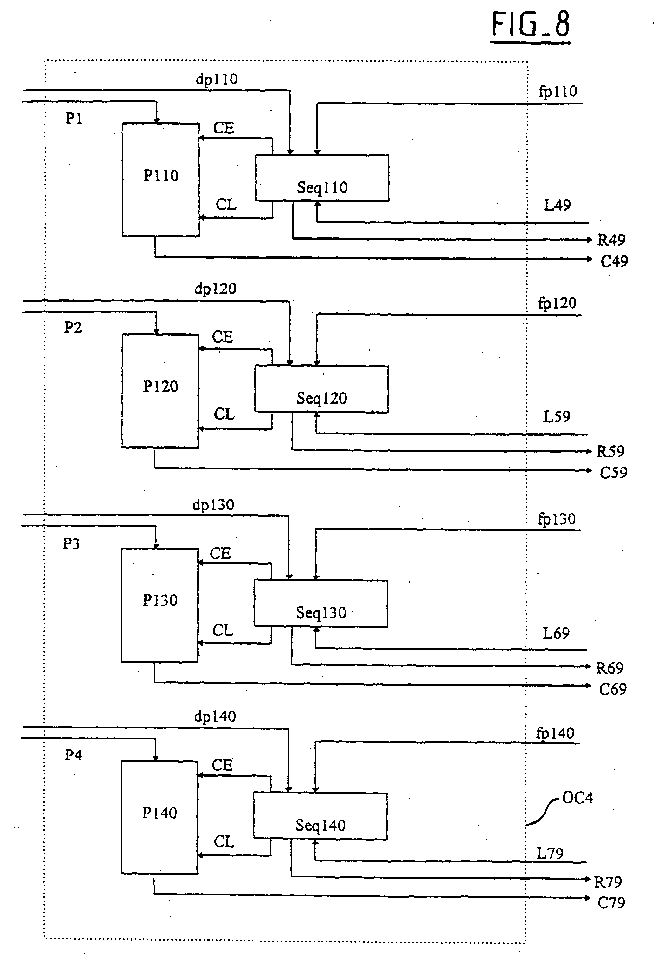

Comme expliqué par la suite en référence à la figure 8, le signal C49 est constitué d'un état antérieur de n bits b1, b5, b9, b13 pour commander une lecture de cellule dans le groupe de cellules 111 à 114. De même, les signaux C59, C69, C79 sont constitués respectivement d'un état antérieur de n bits b2, b6, b10, b14 pour commander une lecture de cellule dans le groupe de cellules 121 à 124, d'un état antérieur de n bits b3, b7, b11, b15 pour commander une lecture de cellule dans le groupe de cellules 131 à 134, d'un état antérieur de n bits b4, b8, b12, b16 pour commander une lecture de cellule dans le groupe de cellules 141 à 144.

Une mise à l'état haut d'un bit disp1 du signal A32 informe l'organe OC2 que la cellule 111 est disponible pour accumuler un paquet à transmettre. L'état de ce bit est l'état complémentaire de la combinaison logique obtenue au moyen de la porte G1. Cet état complémentaire est automaintenu de façon prioritaire par une bascule Md1. La bascule Md1 est remise à zéro par le bit b1 du signal C49. Ceci a pour effet de déclarer la cellule 111 à nouveau disponible dès qu'une lecture en est commencée, permettant ainsi une circulation des paquets de type ver de terre.

Les n fois n signaux disp1 à disp16 sont obtenus comme expliqué si dessus, pour les n bits b1 à b16. Le circuit comprend donc n fois n bascules identiques à la bascule Md1.

L'organe OC3 retranscrit les bits b1, b5, b9, b13 issus du signal A23 dans le signal P1 à destination de l'organe OC4. De même, l'organe OC3 retranscrit les bits b2, b6, b10, b14 issus du signal A23 dans le signal P2, les bits b3, b7, b11, b15 issus du signal A23 dans le signal P3, les bits b4, b8, b12, b16 issus du signal A23 dans le signal P4.

Une mise à un état haut d'un bit dp110 du signal dps indique un début de paquet détecté par une cellule du groupe de n cellules 111 à 114. Le signal dp110 est généré par une porte OU recevant en entrée les sorties de n portes Gd1, Gd2, Gd3, Gd4. La sortie de la porte Gd1 est à l'état haut lorsque le bit b1 du signal A23 et le signal dp101 sont à l'état haut, la sortie de la porte Gd2 est à l'état haut lorsque le bit b5 du signal A23 et le signal dp102 sont à l'état haut, la sortie de la porte Gd3 est à l'état haut lorsque le bit b9 du signal A23 et le signal dp103 sont à l'état haut, la sortie de la porte Gd4 est à l'état haut lorsque le bit b13 du signal A23 et le signal dp104 sont à l'état haut.

Les explications ci-dessus restent valables pour les signaux dp120, dp130, dp140 en remplaçant les bits b1, b5, b9, b13 relatifs au signal A23 respectivement par les bits b2, b6, b10, b14, par les bits b3, b7, b11, b15, par les bits b4, b8, b12, b16 relatifs au signal A23. Le circuit de l'organe OC3 comprend n portes OU identiques à celle représentée en figure 7 et n fois n portes identiques aux n portes Gd1 à Gd4 représentées en figure 7.

En référence à la figure 8, l'organe OC4 comprend un nombre n de piles P110, P120, P130, P140 associées chacune respectivement à un séquenceur Seq110; Seq120, Seq130, Seq140. Pour chaque pile P110, P120, P130, P140, le séquenceur respectif Seq110, Seq120, Seq130, Seq140 dispose de deux pointeurs CE et CL. Le pointeur CE sert à commander une écriture dans la pile P110, P120, P130, P140 respective. Le pointeur CL sert à commander une lecture dans la pile P110, P120, P130, P140 respective. Les pointeurs CE et CL sont initialisés à la première adresse de la pile considérée. Le pointeur CE est incrémenté après chaque écriture. Le pointeur CL est incrémenté après chaque lecture. La pile considérée est reconnue vide quand la valeur du pointeur CL est par exemple égale à la valeur du pointeur CE. Les lectures de la pile considérée respectent ainsi l'ordre des écritures.

Lorsque le séquenceur Seq110 reçoit le signal dp110, il déclenche une écriture de la valeur du signal P1 dans la pile P110 au moyen du pointeur CE. Tant que la pile P110 n'est pas vide, le séquenceur Seq110 envoie un signal R49 à destination de l'organe OC1. Le signal R49 demande une réservation de la sortie 49 et modifie en conséquence la valeur du mot 201. Ceci a pour effet de rendre prioritaire le ou les demandes de transfert de paquets vers la sortie depuis la mémoire 89 sur les demandes de transfert en provenance des entrées du routeur. Dès que le séquenceur Seq110 reçoit un signal L49 en provenance de l'organe OC1, il déclenche une lecture de la pile P110 au moyen du pointeur CL. Le signal L49 indique que la sortie 49 est libre pour recevoir des paquets de données. La lecture de la pile P110 génère un signal C49 qui commande une lecture de la cellule 111, 112, 113, 114 adressée par la valeur du signal P1 lue dans la pile considérée. Lorsque le séquenceur Seq110 détecte une fin de paquet fp110 sur.la ligne 110, il déclenche une nouvelle lecture de la pile P110 jusqu'à ce que celle-ci soit vide. La lecture de chaque cellule 111, 112, 113, 114 transfert son contenu sur la ligne 110 et; grâce aux moyens ici constitués par la pile P110 et par le séquenceur Seq110, dans l'ordre des commandes d'écriture dans ces cellules par les signaux A231, A232, A233, A234.

De même, lorsque le séquenceur Seq120 reçoit le signal dp120, il déclenche une écriture de la valeur du signal P2 dans la pile P120 au moyen du pointeur CE. Tant que la pile P120 n'est pas vide, le séquenceur Seq120 envoie un signal R59 à destination de l'organe OC1. Le signal R59 demande une réservation de la sortie 59. Dès que le séquenceur Seq120 reçoit un signal L59 en provenance de l'organe OC1, il déclenche une lecture de la pile P120 au moyen du pointeur CL. La lecture de la pile P120 génère un signal C59 qui commande une lecture de celle des n cellules 121 à 124 adressée par la valeur du signal P2 lue dans la pile considérée. Lorsque le séquenceur Seq120 détecte une fin de paquet fp120 sur la ligne 120, il déclenche une nouvelle lecture de la pile P120 jusqu'à ce que celle-ci soit vide. La lecture de cellules parmi les cellules 121 à 124 transfert leur contenu sur la ligne 120 et, grâce aux moyens ici constitués par la pile P120 et par le séquenceur Seq120, dans l'ordre des commandes d'écriture dans ces cellules par les signaux A231, A232, A233, A234.

De même, lorsque le séquenceur Seq130, Seq140 reçoit le signal dp130, dp140, il déclenche une écriture de la valeur du signal P3, P4 dans la pile P130, P140 au moyen du pointeur CE. Tant que la pile P130, P140 n'est pas vide, le séquenceur Seq130, Seq140 envoie un signal R69, R79 à destination de l'organe OC1. Le signal R59, R69 demande une réservation de la sortie 59, 69. Dès que le séquenceur Seq130, Seq140 reçoit un signal L69, L79 en provenance de l'organe OC1, il déclenche une lecture de la pile P130, P140 au moyen du pointeur CL. La lecture de la pile P130, P140 génère un signal C69, C79 qui commande une lecture de celle des n cellules 131 à 134, 141 à 144 adressée par la valeur du signal P3, P4 lue dans la pile considérée. Lorsque le séquenceur Seq130, Seq140 détecte une fin de paquet fp130, fp140, sur la ligne 130, 140, il déclenche une nouvelle lecture de la pile P130, P140 jusqu'à ce que celle-ci soit vide. La lecture de cellules parmi les cellules 131 à 134, 141 à 144, transfert leur contenu sur la ligne 130, 140 et, grâce aux moyens ici constitués par la pile P130, P140 et par le séquenceur Seq130, Seq140, dans l'ordre des commandes d'écriture dans ces cellules par les signaux A231, A232, A233, A234.

L'ordre de lecture sur chacune des n lignes de lecture 110, 120, 130, 140 de la mémoire 89 respecte l'ordre d'écriture sur chacune des n lignes d'écriture 101, 102, 103, 104. En respectant l'ordre d'arrivée des paquets, la mémoire accumulatrice 89 favorise le paquet qui a le délai d'attente le plus long, minimisant ainsi la latence entre l'introduction et l'extraction d'un paquet de la mémoire 89. Chaque groupe de n cellules 111 à 114, 121 à 124, 131 à 134, 141 à 144, constitue une file d'attente où le premier paquet entré est le premier paquet sorti. Chaque file d'attente est dédiée à une sortie 49, 59, 69, 79.

Chaque groupe de n cellules dispose d'un nombre n d'accès en écriture indépendants par les lignes 101 à 104, égal au nombre n d'entrées 9, 19, 29, 39. Il en résulte que chaque entrée du routeur, par exemple l'entrée 9, dispose d'au moins un accès à chaque file d'attente dédiée à une sortie et constituée d'un groupe de cellules. Les cellules d'une même file d'attente sont équivalentes et non ordonnées, lorsque plusieurs cellules sont disponibles et accessibles, le choix d'une cellule est réalisable par exemple au moyen d'un mécanisme de priorité fixe tel que cellule 114 plus prioritaire que cellule 113 plus prioritaire que cellule 112 plus prioritaire que cellule 111. Si les cellules accessibles d'un groupe de cellules, ne sont pas disponibles, la file d'attente est considérée pleine et empêche la présentation d'un nouveau paquet sur l'entrée 9. Cependant, un paquet ne se trouve bloqué en entrée du routeur que par un paquet destiné à la même sortie car dans la file d'attente dédiée à cette sortie. Chaque groupe de cellules constitue donc avec la sortie associée, un tampon de sortie du routeur.

La figure 9 représente un circuit d'arbitrage recevant quatre signaux d21, d22 , d23, d24 en entrée et générant quatre signaux d01, d02, d03, d04 en sortie; piloté par un signal à trois bits tr0, tr1, tr2. Un sous ensemble fonctionnel 180 est piloté par le bit tr0. Un sous ensemble fonctionnel 181 est piloté par le bit tr1. Un sous ensemble fonctionnel 182 est piloté par le bit tr2.

Le sous ensemble 180 génère les signaux d01 et d02 à partir de deux signaux d11 et d12 générés par le sous ensemble 181. La sortie d'une porte 147 est à l'état haut lorsque le signal d12 est à l'état bas ou lorsque le bit tr0 est à l'état haut. Le signal d01 est à l'état haut lorsque les deux entrées d'une porte 148 sont à l'état haut, c'est à dire lorsque le signal d11 est à l'état haut et que le bit tr0 est à l'état haut ou le signal d12 est l'état bas. La sortie d'une porte 157 est à l'état haut lorsque le signal d11 est à l'état bas ou lorsque le bit tr0 est à l'état bas. Le signal d02 est à l'état haut lorsque les deux entrées d'une porte 158 sont à l'état haut, c'est à dire lorsque le signal d12 est à l'état haut et que le bit tr0 est à l'état bas ou le signal d11 est l'état bas. Ainsi, si les deux signaux d11 et d12 sont à l'état haut, seul le signal d01 est à l'état haut si le bit tr0 est à l'état haut et seul le signal d02 est à l'état haut si le bit tr0 est à l'état bas.

Le sous ensemble 182 génère les signaux d03 et d04 à partir de deux signaux d13 et d14 générés par le sous ensemble 181. La sortie d'une porte 167 est à l'état haut lorsque le signal d14 est à l'état bas ou lorsque le bit tr2 est à l'état haut. Le signal d04 est à l'état haut lorsque les deux entrées d'une porte 168 sont à l'état haut, c'est à dire lorsque le signal d13 est à l'état haut et que le bit tr2 est à l'état haut ou le signal d14 est l'état bas. La sortie d'une porte 177 est à l'état haut lorsque le signal d13 est à l'état bas ou lorsque le bit tr2 est à l'état bas. Le signal d04 est à l'état haut lorsque les deux entrées d'une porte 178 sont à l'état haut, c'est à dire lorsque le signal d14 est à l'état haut et que le bit tr2 est à l'état bas ou le signal d13 est l'état bas. Ainsi, si les deux signaux d13 et d14 sont à l'état haut, seul le signal d03 est à l'état haut si le bit tr2 est à l'état haut et seul le signal d04 est à l'état haut si le bit tr2 est à l'état bas.

Le sous ensemble 181 génère les signaux d11, d12, d13, d14 à partir des signaux d21, d22, d23, d24. La sortie d'une porte 156 est à l'état haut lorsque la sortie d'une porte 164 est à l'état bas ou lorsque le bit tr1 est à l'état haut. La sortie de la porte 164 est à l'état bas si les signaux d23 et d24 sont à l'état bas. Le signal d11 est à l'état haut lorsque les deux entrées d'une porte 145 sont à l'état haut, c'est à dire lorsque le signal d21 est à l'état haut et que le bit tr1 est à l'état haut ou les signaux d23 et d24 sont à l'état bas. Le signal d12 est à l'état haut lorsque les deux entrées d'une porte 155 sont à l'état haut, c'est à dire lorsque le signal d22 est à l'état haut et que le bit tr1 est à l'état haut ou les signaux d23 et d24 sont à l'état bas. La sortie d'une porte 166 est à l'état haut lorsque la sortie d'une porte 170 est à l'état bas ou lorsque le bit tr1 est à l'état bas. La sortie de la porte 170 est à l'état bas si les signaux d21 et d22 sont à l'état bas. Le signal d13 est à l'état haut lorsque les deux entrées d'une porte 165 sont à l'état haut, c'est à dire lorsque le signal d23 est à l'état haut et que le bit tr1 est à l'état bas ou les signaux d21 et d22 sont à l'état bas. Le signal d14 est à l'état haut lorsque les deux entrées d'une porte 175 sont à l'état haut, c'est à dire lorsque le signal d24 est à l'état haut et que le bit tr1 est à l'état bas ou les signaux d21 et d22 sont à l'état bas. Ainsi, si les quatre signaux d21, d22, d23, d24 sont à l'état haut, seul les signaux d11, d12 sont à l'état haut si le bit tr1 est à l'état haut et seul les signaux d13, d14 sont à l'état haut si le bit tr1 est à l'état bas.

Il résulte de la combinaison des sous ensembles 180 à 182 du circuit d'arbitrage en référence à la figure 9 qu'au plus un des signaux d01 à d04 est à l'état haut lorsqu'au moins un des signaux d21 à d24 est à l'état haut. L'ordre de priorité pour retenir un état haut résulte de l'état des bits tr0, tr1, tr2. L'état haut des signaux d21, d22 est prioritaire sur l'état haut des signaux d23, d24 si le bit tr1 est à l'état haut et réciproquement. L'état haut du signal d21 est prioritaire sur l'état haut du signal d22 si le bit tr0 est à l'état haut et réciproquement. L'état haut du signal d23 est prioritaire sur l'état haut du signal d24 si le bit tr2 est à l'état haut et réciproquement.

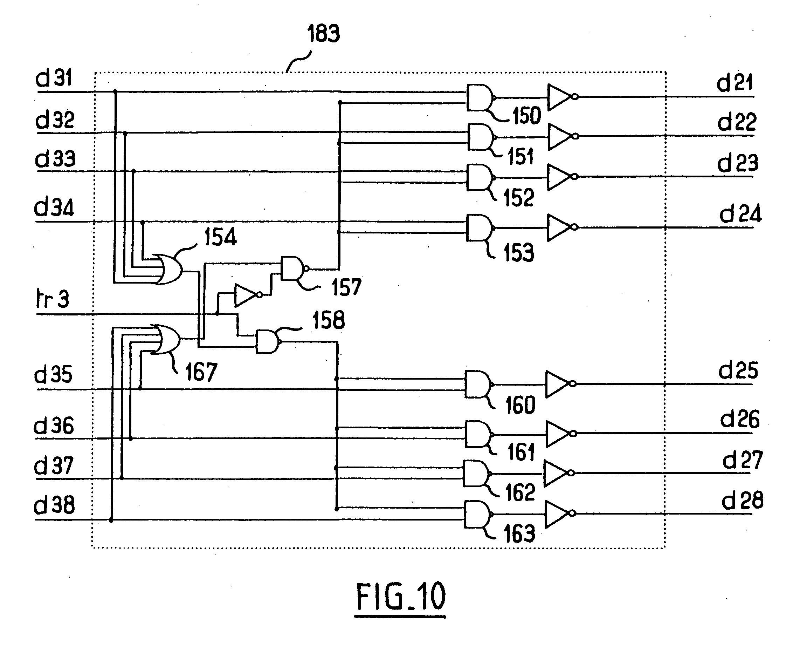

L'enseignement qui précède en référence à la figure 9 pour un nombre n de signaux d21 à d24 égal à quatre peut être étendu à un nombre n de signaux d31 à d38 égal à huit, en référence à la figure 10. Le circuit d'arbitrage comprend alors de plus un sous ensemble fonctionnel 183 piloté par un bit tr3 pour générer des signaux d21 à d28 à partir des signaux d31 à d38. Les signaux d21 à d24 sont transmis au sous ensemble fonctionnel 181 de la figure 9. Le circuit d'arbitrage comprend alors encore des sous ensembles fonctionnels 184, 185, 186 respectivement identiques aux sous ensembles fonctionnels 180, 181, 182 et respectivement pilotés par des bits tr4, tr5, tr6 pour générer des signaux d05, d06, d07, d08. Il suffit de remplacer les repères correspondants sur la figure 9 pour obtenir une représentation du circuit d'arbitrage. Les signaux d25 à d28 sont transmis au sous ensemble 184.

La sortie d'une porte 157 est à l'état haut lorsque la sortie d'une porte 167 est à l'état bas ou lorsque le bit tr3 est à l'état haut. La sortie de la porte 167 est à l'état bas si les signaux d35, d36, d37 et d38 sont à l'état bas. Le signal d21 est à l'état haut lorsque les deux entrées d'une porte 150 sont à l'état haut, c'est à dire lorsque le signal d31 est à l'état haut et que le bit tr3 est à l'état haut ou les signaux d35 à d38 sont tous à l'état bas. Le signal d22 est à l'état haut lorsque les deux entrées d'une porte 151 sont à l'état haut, c'est à dire lorsque le signal d32 est à l'état haut et que le bit tr3 est à l'état haut ou les signaux d35 à d38 sont tous à l'état bas. Le signal d33 est à l'état haut lorsque les deux entrées d'une porte 152 sont à l'état haut, c'est à dire lorsque le signal d33 est à l'état haut et que le bit tr3 est à l'état haut ou les signaux d35 à d38 sont tous à l'état bas. Le signal d24 est à l'état haut lorsque les deux entrées d'une porte 153 sont à l'état haut, c'est à dire lorsque le signal d34 est à l'état haut et que le bit tr3 est à l'état haut ou les signaux d35 à d38 sont tous à l'état bas. La sortie d'une porte 168 est à l'état haut lorsque la sortie d'une porte 154 est à l'état bas ou lorsque le bit tr3 est à l'état bas. La sortie de la porte 154 est à l'état bas si les signaux d31, d32, d33 et d34 sont à l'état bas. Le signal d25 est à l'état haut lorsque les deux entrées d'une porte 160 sont à l'état haut, c'est à dire lorsque le signal d35 est à l'état haut et que le bit tr3 est à l'état bas ou les signaux d31 à d35 sont tous à l'état bas. Le signal d26 est à l'état haut lorsque les deux entrées d'une porte 161 sont à l'état haut, c'est à dire lorsque le signal d36 est à l'état haut et que le bit tr3 est à l'état bas ou les signaux d31 à d34 sont tous à l'état bas. Le signal d27 est à l'état haut lorsque les deux entrées d'une porte 162 sont à l'état haut, c'est à dire lorsque le signal d37 est à l'état haut et que le bit tr3 est à l'état bas ou les signaux d31 à d34 sont tous à l'état bas. Le signal d28 est à l'état haut lorsque les deux entrées d'une porte 163 sont à l'état haut, c'est à dire lorsque le signal d38 est à l'état haut et que le bit tr3 est à l'état bas ou les signaux d31 à d34 sont tous à l'état bas. Ainsi, si les huit signaux d31, d32, d33, d34, d35, d36, d37, d38 sont à l'état haut, seul les signaux d21, d22, d23, d24 sont à l'état haut si le bit tr3 est à l'état haut et seul les signaux d25, d26, d27, d28 sont à l'état haut si le bit tr3 est à l'état bas.

L'ordre de priorité pour retenir un état haut résulte de l'état des bits tr0, tr1, tr2, tr3, tr4, tr5, tr6. L'état haut des signaux d31 à d34 est prioritaire sur l'état haut des signaux d35 à d38 si le bit tr3 est à l'état haut et réciproquement.

Les blocs 240, 250, 260, 270 de l'organe OC1 sont ici des circuits à quatre entrées. Ils sont alors constitués chacun d'un circuit d'arbitrage conforme à celui expliqué en référence à la figure 9. Les bits tr0, tr1, tr2 sont produits par le compteur 241 pour le bloc 240, par le compteur 251 pour le bloc 250, par le compteur 261 pour le bloc 260, par le compteur 271 pour le bloc 270.

Les blocs 205, 215, 225, 235 de l'organe OC2 sont ici des circuits à quatre entrées. Ils sont alors constitués chacun d'un circuit d'arbitrage conforme à celui expliqué en référence à la figure 9. Les bits tr0, tr1, tr2 sont produits par le compteur 207 pour le bloc 205, par le compteur 217 pour le bloc 207, par le compteur 227 pour le bloc 225, par le compteur 237 pour le bloc 235.

Les circuits 521, 522, 523, 524 de l'organe OC2 sont ici des circuits à quatre entrées. Ils sont alors constitués chacun d'un circuit d'arbitrage conforme à celui expliqué en référence à la figure 9. Les bits tr0, tr1, tr2 sont fixés, par exemple à un état bas, dont il résulte un ordre de priorité fixe sur l'état haut des entrées.

Le circuit 533 de l'organe OC2 est ici un circuit à quatre entrées. Il est alors constitué d'un circuit d'arbitrage conforme à celui expliqué en référence à la figure 9. Les valeurs des bits tr0, tr1, tr2 sont respectivement égales aux valeurs des signaux 534, 535, 536.

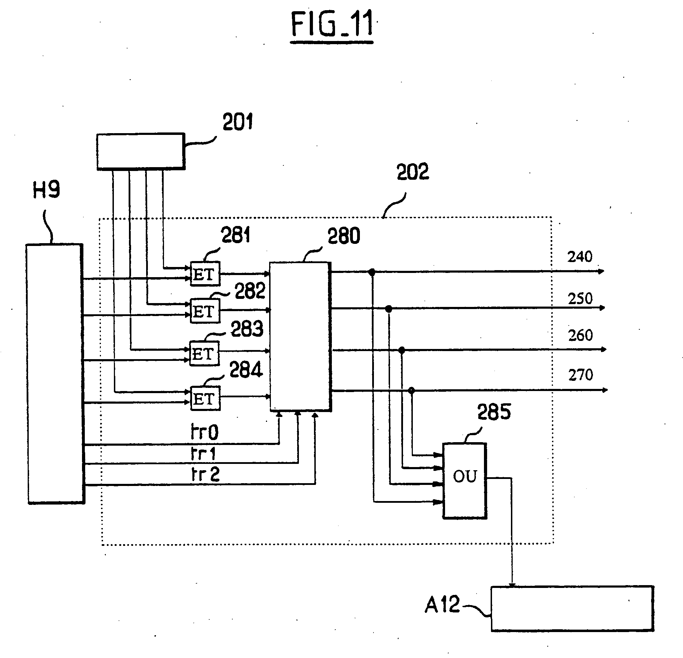

En référence à la figure 11, le bloc 202 comprend un circuit d'arbitrage 280 conforme dans le cas présent où n est égal à quatre, au circuit d'arbitrage expliqué en référence à la figure 9. Le circuit 280 reçoit en entrée la sortie d'une porte 281, la sortie d'une porte 282, la sortie d'une porte 283 et la sortie d'une porte 284. La sortie de la porte 281 est à l'état haut si la sortie 49 du routeur est proposée dans l'entête H9 du paquet à transférer et si le bit du mot 201 correspondant à la disponibilité de la sortie 49 est à l'état haut. La sortie de la porte 282 est à l'état haut si la sortie 59 du routeur est proposée dans l'entête H9 du paquet à transférer et si le bit du mot 201 correspondant à la disponibilité de la sortie 59 est à l'état haut. La sortie de la porte 283 est à l'état haut si la sortie 69 du routeur est proposée dans l'entête H9 du paquet à transférer et si le bit du mot 201 correspondant à la disponibilité de la sortie 69 est à l'état haut. La sortie de la porte 281 est à l'état haut si la sortie 79 du routeur est proposée dans l'entête H9 du paquet à transférer et si le bit du mot 201 correspondant à la disponibilité de la sortie 79 est à l'état haut.

Les signaux tr0, tr1, tr2 de pilotage du circuit 280 sont donnés par l'entête H9. En retenant un seul état haut s'il existe, parmi ceux des sorties des portes 281 à 284, le circuit 280 envoie l'état de sortie de la porte 281 vers le bloc 240, l'état de sortie de la porte 282 vers le bloc 250, l'état de sortie de la porte 283 vers le bloc 260, l'état de sortie de la porte 284 vers le bloc 270. Ainsi, au plus une sortie parmi la ou les sorties proposées par l'entête H9 qui est ou sont disponibles, est sélectionnée par le bloc 202.

La sortie d'une porte 285 est à l'état haut si une sortie du circuit 280 est à l'état haut. L'état haut de la sortie de la porte 285 signifie qu'une sortie du routeur est attribuée à l'entrée 9 par le bloc 202. La sortie de la porte 285 est écrite dans le bit du mot A12 correspondant à l'entrée 9.

## Revendications

1. Routeur comprenant un nombre n d'entrées (9, 19, 29, 39) et un nombre n de sorties (49, 59, 69, 79), destiné à acheminer des paquets de données des entrées (9, 19, 29, 39) vers les sorties (49, 59, 69, 79), **caractérisé en ce qu'**il comprend :
- un commutateur réticulaire d'acheminement constitué d'un nombre n de premières lignes d'entrées (5, 6, 7, 8), d'un nombre n de deuxièmes lignes d'entrées (1, 2, 3, 4), d'un nombre n de premières lignes de sortie (50, 60, 70, 80) et d'un nombre n de deuxièmes lignes de sortie (10, 20, 30, 40), chacune des premières lignes d'entrées (5, 6, 7, 8) étant connectée respectivement à une entrée (9, 19, 29, 39) et chacune des premières lignes de sortie (50, 60, 70, 80) étant connectées respectivement à une sortie (49, 59, 69, 79) et commutable sur l'une quelconque des lignes d'entrées (1, 2, 3, 4, 5, 6, 7, 8) et chacune des deuxièmes lignes de sortie étant commutable sur l'une quelconque des lignes d'entrées ;
- une mémoire (89) comprenant un nombre n d'entrées en écriture (101, 102, 103, 104) connectées chacune à l'une des deuxièmes lignes de sortie (10, 20, 30, 40), un nombre n de sortie en lecture (110, 120, 130, 140) connectées chacune à l'une des deuxièmes lignes d'entrées (1, 2, 3, 4) et un nombre n de groupes de n cellules (111, 112, 113, 114), (121, 122, 123, 124), (131, 132, 133, 134), (141, 142, 143, 144);
- chaque ligne de lecture (110) permettant une extraction de paquet contenu dans un groupe de n cellules (111 à 114);
- chaque ligne d'écriture (101) permettant une introduction de paquet dans l'une des cellules (111, 121, 131, 141) de chaque groupe de n cellules.

2. Routeur selon la revendication 1, **caractérisé en ce que** l'introduction de paquet dans l'une des dites cellules par la ligne d'écriture (101) est commandée par une ligne de sortie (209) d'un commutateur réticulaire de commande à n sorties (209, 219, 229, 239) dont la commutation sur l'une de ses n lignes d'entrée (208, 218, 228, 238) est commandée par un signal (C1) de façon identique à une commutation de la ligne de sortie (10) sur l'une des n lignes d'entrée (5, 6, 7, 8) du commutateur réticulaire d'acheminement, chaque ligne d'entrée (208, 218, 228, 238) véhiculant une valeur de mot (206, 216, 226, 236) à n bits dont le rang correspond à un groupe de cellules, chaque mot (206, 216, 226, 236) étant associé à une entrée (9, 19, 29, 39) du routeur.

3. Routeur selon la revendication 1 ou 2, **caractérisé en ce que** l'extraction de paquet contenu dans un groupe de n cellules (111 à 114) est séquentiellement commandée par un signal (C49) extrait d'une pile (P110) de façon à ce que l'état du signal extrait (C49) soit égal à l'état d'un signal (P1) le plus anciennement introduit dans la pile (P110), l'état du signal (P1) répertoriant une cellule (111, 112, 113, 114) et le signal (P1) étant introduit dans la pile (P110) à l'instant où débute une introduction de paquet dans ladite cellule répertoriée.

4. Routeur selon l'une des revendications précédentes, **caractérisé en ce qu'**il comprend un premier organe de commande (OC1) pour établir sur un premier cycle d'horloge (CK1) une commutation de l'une des deux fois n lignes d'entrée (1 à 8) sur celle des n lignes de sortie (50, 60, 70, 80) correspondant à la sortie (49, 59, 69, 79) vers laquelle acheminer un paquet de données si ladite sortie (49, 59, 69, 79) est disponible.

5. Routeur selon la revendication 4, **caractérisé en ce qu'**il comprend un deuxième organe de commande (OC2) pour établir sur un deuxième cycle d'horloge (CK2) une commutation de l'une des n lignes d'entrée (5 à 8) correspondant à l'entrée (9, 19, 29, 39) sur l'une des lignes de sortie (10, 20, 30, 40) vers la mémoire (89) pour laquelle il existe une cellule accessible dans le groupe de cellules correspondant à la sortie (49, 59, 69, 79) vers laquelle acheminer un paquet de données si ladite sortie (49, 59, 69, 79) n'est pas disponible.

6. Routeur selon la revendication 4, **caractérisé en ce que** le premier organe de commande (OC1) comprend pour chaque entrée (9, 19, 29, 39) un premier bloc combinatoire (202, 212, 222, 232) pour définir sur un état haut de premier cycle d'horloge (CK1), la sortie (49, 59, 69, 79) disponible si elle existe, vers laquelle acheminer le paquet de donnée présenté sur ladite entrée (9, 19, 29, 39), tant que la ligne d'entrée (5, 6, 7, 8) correspondante n'est pas commutée sur une ligne de sortie (10, 20, 30, 40, 50, 60, 70).

7. Routeur selon la revendication 5 ou 6, **caractérisé en ce que** le deuxième organe de commande (OC2) comprend pour chaque entrée (9, 19, 29, 39) un deuxième bloc combinatoire (204, 214, 224, 234) pour définir sur un état haut de premier cycle d'horloge (CK1), une requête d'accès (R1, R2, R3, R4) à la mémoire (89) correspondant à la sortie (49, 59, 69, 79) vers laquelle acheminer le paquet de donnée présenté sur ladite entrée (9, 19, 29, 39) pour laquelle il existe une cellule accessible dans la mémoire (89), tant que la ligne d'entrée (5, 6, 7, 8) correspondante n'est pas commutée sur une ligne de sortie (10, 20, 30, 40, 50, 60, 70).

8. Routeur selon les revendications 6 et 7, **caractérisé en ce que** le premier bloc combinatoire (202, 212, 222, 232) positionne pendant l'état haut de premier cycle d'horloge (CK1), un bit de signal (A12) à un état haut pour indiquer qu'une sortie disponible est définie pour l'entrée (9, 19, 29, 39) correspondante et **en ce que** le deuxième bloc combinatoire (204, 214, 224, 234) valide pendant un état de cycle d'horloge suivant l'état haut de premier cycle d'horloge (CK1), la requête d'accès (R1, R2, R3, R4) à la mémoire (89).

9. Routeur selon la revendication 4 ou 6, **caractérisé en ce que** le premier organe de commande (OC1) comprend pour chaque sortie (49, 59, 69, 79) un circuit d'arbitrage (240, 250, 260, 270) pour retenir pendant l'état bas du premier cycle d'horloge (CK1), au plus une des entrées (9, 19, 29, 39) qui demande à établir une commutation de la ligne d'entrée (5, 6, 7, 8) correspondante avec la ligne de sortie (50, 60, 70, 80) correspondante, de façon à effectuer ladite commutation si aucune demande de commutation en provenance de la mémoire (89) n'existe.

10. Routeur selon la revendication 4 ou 7, **caractérisé en ce que** le deuxième organe de commande (OC2) comprend pour chaque entrée en écriture (101, 102, 103, 104) de la mémoire (89), un circuit d'arbitrage (205, 215, 225, 235) pour retenir pendant l'état haut d'un deuxième cycle d'horloge (CK2), au plus une des entrées (9, 19, 29, 39) qui demande à établir une commutation de la ligne d'entrée (5, 6, 7, 8) correspondante avec la ligne de sortie (10, 20, 30, 40) correspondante, de façon à effectuer ladite commutation.

## Claims

1. Router comprising a number n of inputs (9, 19, 29, 39) and a number n of outputs (49, 59, 69, 79), intended for routing data packets from the inputs (9, 19, 29, 39) to the outputs (49, 59, 69, 79), **characterised in that** it comprises:
- a reticular routing switch constituted by a number n of first incoming lines (5, 6, 7, 8), a number n of second incoming lines (1, 2, 3, 4), a number n of first outgoing lines (50, 60, 70, 80) and a number n of second outgoing lines (10, 20, 30, 40), each of the first incoming lines (5, 6, 7, 8) being connected to an input (9, 19, 29, 39) respectively, and each of the first outgoing lines (50, 60, 80) being connected to an output (49, 59, 69, 79) respectively and switchable to any one of the incoming lines (1, 2, 3, 4, 5, 6, 7, 8) and each of the second outgoing lines being switchable to any one of the incoming lines;
- a memory (89) comprising a number n of write inputs (101, 102, 103, 104) each connected to one of the second outgoing lines (10, 20, 30, 40), a number n of read outputs (110, 120, 130, 140) each connected to one of the second incoming lines (1, 2, 3, 4) and a number n of groups of n cells (111, 112, 113, 114), (121, 122, 123, 124), (131, 132, 133, 134), (141, 142, 143, 144);
- each read line (110) allowing extraction of a packet contained in a group of n cells (111 to 114);
- each write line (101) allowing introduction of a packet into one of the cells (111, 121, 131, 141) of each group of n cells.

2. Router according to Claim 1, **characterised in that** the introduction of a packet into one of said cells by the write line (101) is controlled by an outgoing line (209) of a reticular control switch with n outputs (209, 219, 229, 239), the switching of which, to one of its n incoming lines (208, 218, 228, 238) is controlled by a signal (C1) in an identical manner to switching of the outgoing line (10) to one of the n incoming lines (5, 6, 7, 8) of the reticular routing switch, each incoming line (208, 218, 228, 238) conveying a value of an n-bit word (206, 216, 226, 236), the rank of which corresponds to a group of cells, each word (206, 216, 226, 236) being associated with an input (9, 19, 29, 39) of the router.

3. Router according to Claim 1 or 2, **characterised in that** the extraction of a packet contained in a group of n cells (111 to 114) is sequentially controlled by a signal (C49) extracted from a stack (P110) in such a way that the state of the extracted signal (C49) is equal to the state of the earliest signal (P1) introduced into the stack (P110), the state of the signal (P1) indexing a cell (111, 112, 113, 114) and the signal (P1) being introduced into the stack (P110) at the moment when a packet starts to be introduced into said indexed cell.

4. Router according to one of the preceding claims, **characterised in that** it comprises a first control member (OC1) for establishing, on a first clock cycle (CK1), a switching of the one of the twice n incoming lines (1 to 8) to that one of the n outgoing lines (50, 60, 70, 80) corresponding to the output (49, 59, 69, 79) to which a data packet is to be routed if said output (49, 59, 69, 79) is available.

5. Router according to Claim 4, **characterised in that** it comprises a second control member (OC2) for establishing, on a second clock cycle (CK2), a switching of the one of the n incoming lines (5 to 8) corresponding to the input (9, 19, 29, 39) on the one of the outgoing lines (10, 20, 30, 40) to the memory (89) for which there exists an accessible cell in the group of cells corresponding to the output (49, 59, 69, 79) to which a data packet is to be routed if said output (49, 59, 69, 79) is not available.

6. Router according to Claim 4, **characterised in that** the first control member (OC1) comprises, for each input (9, 19, 29, 39), a first combinational block (202, 212, 222, 232) for defining, in a high state of the first clock cycle (CK1), the available output (49, 59, 69, 79), if any, to which the data packet presented at said input (9, 19, 29, 39) is to be routed, as long as the corresponding incoming line (5, 6, 7, 8) is not switched to an outgoing line (10, 20, 30, 40, 50, 60, 70).

7. Router according to Claim 5 or 6, **characterised in that** the second control member (OC2) comprises, for each input (9, 19, 29, 39), a second combinational block (204, 214, 224, 234) for defining, in a high state of the first clock cycle (CK1), a request (R1, R2, R3, R4) to access the memory (89) corresponding to the output (49, 59, 69, 79) to which the data packet presented at said input (9, 19, 29, 39) is to be routed, for which there exists an accessible cell in the memory (89), as long as the corresponding incoming line (5, 6, 7, 8) is not switched to an outgoing line (10, 20, 30, 40, 50, 60, 70).

8. Router according to Claims 6 and 7, **characterised in that**, during the high state of the first clock cycle (CK1), the first combinational block (202, 212, 222, 232) sets a bit of a signal (A12) to a high state in order to indicate that an available output is defined for the corresponding input (9, 19, 29, 39) and **in that**, during a clock cycle state that follows the high state of the first clock cycle (CK1), the second combinational block (204, 214, 224, 234) validates the request (R1, R2, R3, R4) to access the memory (89).

9. Router according to Claim 4 or 6, **characterised in that** the first control member (OC1) comprises, for each output (49, 59, 69, 79), an arbitration circuit (240, 250, 260, 270) for selecting during the low state of the first clock cycle (CK1), at most one of the inputs (9, 19, 29, 39) that is requesting to establish switching of the corresponding incoming line (5, 6, 7, 8) with the corresponding outgoing line (50, 60, 70, 80), in order to perform said switching if there is no switching request originating from the memory (89).

10. Router according to Claim 4 or 7, **characterised in that** the second control member (OC2) comprises, for each write input (101, 102, 103, 104) of the memory (89), an arbitration circuit (205, 215, 225, 235) for selecting, during the high state of a second clock cycle (CK2), at most one of the inputs (9, 19, 29, 39) that is requesting to establish switching of the corresponding incoming line (5, 6, 7, 8) with the corresponding outgoing line (10, 20, 30, 40), in order to perform said switching.

## Patentansprüche

1. Router, der eine Anzahl n Eingänge (9, 19, 29, 39) und eine Anzahl n Ausgänge (49, 59, 69, 79) aufweist und dazu bestimmt ist, Datenpakete von den Eingängen (9, 19, 29, 39) zu den Ausgängen (49, 59, 69, 79) zu lenken, **dadurch gekennzeichnet, dass** er umfasst:
- einen netzförmigen Lenkungsumschalter, der aus einer Anzahl n erster Eingangsleitungen (5, 6, 7, 8), einer Anzahl n zweiter Eingangsleitungen (1, 2, 3, 4), einer Anzahl n erster Ausgangsleitungen (50, 60, 70, 80) und einer Anzahl n zweiter Ausgangsleitungen (10, 20, 30, 40) gebildet ist, wobei jede der ersten Eingangsleitungen (5, 6, 7, 8) mit einem jeweiligen Eingang (9, 19, 29, 39) verbunden ist und jede der ersten Ausgangsleitungen (50, 60, 70, 80) mit einem jeweiligen Ausgang (49, 59, 69, 79) verbunden und zu irgendeiner der Eingangsleitungen (1, 2, 3, 4, 5, 6, 7, 8) umschaltbar ist und jede der zweiten Ausgangsleitungen zu irgendeiner der Eingangsleitungen umschaltbar ist;
- einen Speicher (89), der eine Anzahl n Schreibeingänge (101, 102, 103, 104), die jeweils mit einer der zweiten Ausgangsleitungen (10, 20, 30, 40) verbunden sind, eine Anzahl n Leseausgänge (110, 120, 130, 140), die jeweils mit einer der zweiten Eingangsleitungen (1, 2, 3, 4) verbunden sind, und eine Anzahl n von Gruppen aus n Zellen (111, 112, 113, 114), (121, 122, 123, 124), (131, 132, 133, 134), (141, 142, 143, 144) enthält;
- wobei jede Leseleitung (110) eine Entnahme eines in einer Gruppe aus n Zellen (111 bis 114) enthaltenen Pakets ermöglicht;
- jede Schreibleitung (101) eine Paketeingabe in eine der Zellen (111, 121, 131, 141) jeder Gruppe aus n Zellen ermöglicht.

2. Router nach Anspruch 1, **dadurch gekennzeichnet, dass** die Paketeingabe in eine der Zellen über die Schreibleitung (101) durch eine Ausgangsleitung (209) eines netzförmigen Steuerumschalters mit n Ausgängen (209, 219, 229, 239) gesteuert wird, deren Umschalten zu einer seiner n Eingangsleitungen (208, 218, 228, 238) durch ein Signal (C1) identisch zu einem Umschalten von der Ausgangsleitung (10) zu einer der n Eingangsleitungen (5, 6, 7, 8) des netzförmigen Lenkungsumschalters gesteuert wird, wobei jede Eingangsleitung (208, 218, 228, 238) einen Wortwert (206, 216, 226, 236) mit n Bits transportiert, dessen Rang einer Gruppe von Zellen entspricht, wobei jedes Wort (206, 216, 226, 236) einem Eingang (9, 19, 29, 39) des Routers zugeordnet ist.

3. Router nach Anspruch 1 oder 2, **dadurch gekennzeichnet, dass** die Entnahme eines in einer Gruppe aus n Zellen (111 bis 114) enthaltenen Pakets sequentiell durch ein Signal (C49) gesteuert wird, das aus einem Stapelspeicher (P110) in der Weise entnommen wird, dass der Zustand des entnommenen Signals (C49) gleich dem Zustand eines Signals (P1) ist, das am weitesten zurückliegend in den Stapelspeicher (P110) eingegeben worden ist, wobei der Zustand des Signals (P1) eine Zelle (111, 112, 113, 114) bezeichnet und das Signal (P1) in den Stapelspeicher (P110) zu dem Zeitpunkt eingegeben wird, zu dem eine Paketeingabe in die bezeichnete Zelle beginnt.

4. Router nach einem der vorhergehenden Ansprüche, **dadurch gekennzeichnet, dass** er ein erstes Steuerorgan (OC1) umfasst, um in einem ersten Taktzyklus (CK1) ein Umschalten von einer der zweimal n Eingangsleitungen (1 bis 8) zu jener der n Ausgangsleitungen (50, 60, 70, 80), die dem Ausgang (49, 59, 69, 79) entspricht, zu dem ein Datenpaket gelenkt werden soll, falls dieser Ausgang (49, 59, 69, 79) verfügbar ist, auszuführen.

5. Router nach Anspruch 4, **dadurch gekennzeichnet, dass** er ein zweites Steuerorgan (OC2) umfasst, um in einem zweiten Taktzyklus (CK2) ein Umschalten von einer der n Eingangsleitungen (5 bis 8), die dem Eingang (9, 19, 29, 39) entspricht, zu einer der Ausgangsleitungen (10, 20, 30, 40) zu dem Speicher (89), für die eine zugreifbare Zelle in der Gruppe aus Zellen vorhanden ist, die dem Ausgang (49, 59, 69, 79) entspricht, zu der ein Datenpaket gelenkt werden soll, falls der Ausgang (49, 59, 69, 79) nicht verfügbar ist, auszuführen.

6. Router nach Anspruch 4, **dadurch gekennzeichnet, dass** das erste Steuerorgan (OC1) für jeden Eingang (9, 19, 29, 39) einen ersten kombinatorischen Block (202, 212, 222, 232) umfasst, um bei jedem hohen Zustand des ersten Taktzyklus (CK1) den verfügbaren Ausgang (49, 59, 69, 79) zu definieren, falls er existiert, zu dem das an diesem Eingang (9, 19, 29, 39) vorhandene Datenpaket gelenkt werden soll, solange die entsprechende Eingangsleitung (5, 6, 7, 8) nicht zu einer Ausgangsleitung (10, 20, 30, 40, 50, 60, 70) umgeschaltet wird.

7. Router nach Anspruch 5 oder 6, **dadurch gekennzeichnet, dass** das zweite Steuerorgan (OC2) für jeden Eingang (9, 19, 29, 39) einen zweiten kombinatorischen Block (204, 214, 224, 234) umfasst, um bei jedem hohen Zustand des ersten Taktzyklus (CK1) eine Anforderung (R1, R2, R3, R4) für den Zugriff auf den Speicher (89) zu definieren, der dem Ausgang (49, 59, 69, 79) entspricht, zu dem das an diesem Eingang (9, 19, 29, 39) vorhandene Datenpaket gelenkt werden soll, für den eine zugreifbare Zelle im Speicher (89) vorhanden ist, solange die entsprechende Eingangsleitung (5, 6, 7, 8) nicht zu einer Ausgangsleitung (10, 20, 30, 40, 50, 60, 70) umgeschaltet wird.

8. Router nach den Ansprüchen 6 und 7, **dadurch gekennzeichnet, dass** der erste kombinatorische Block (202, 212, 222, 232) während des hohen Zustands des ersten Taktzyklus (CK1) ein Signalbit (A12) auf einen hohen Zustand bringt, um anzugeben, dass für den entsprechenden Eingang (9, 19, 29, 39) ein verfügbarer Ausgang definiert ist, und dass der zweite kombinatorische Block (204, 214, 224, 234) während eines Zustands des Taktzyklus, der dem hohen Zustand des ersten Taktzyklus (CK1) folgt, die Anforderung (R1, R2, R3, R4) für den Zugriff auf den Speicher (89) validiert.

9. Router nach Anspruch 4 oder 6, **dadurch gekennzeichnet, dass** das erste Steuerorgan (OC1) für jeden Ausgang (49, 59, 69, 79) eine Arbitrierungsschaltung (240, 250, 260, 270) umfasst, um während des tiefen Zustands des ersten Taktzyklus (CK1) höchstens einen der Eingänge (9, 19, 29, 39), der die Ausführung eines Umschaltens von der entsprechenden Eingangsleitung (5, 6, 7, 8) zu der entsprechenden Ausgangsleitung (50, 60, 70, 80) anfordert, freizuhalten, derart, dass das Umschalten ausgeführt wird, falls keine Umschaltanforderung von dem Speicher (89) vorhanden ist.

10. Router nach Anspruch 4 oder 7, **dadurch gekennzeichnet, dass** das zweite Steuerorgan (OC2) für jeden Schreibeingang (101, 102, 103, 104) des Speichers (89) eine Arbitrierungsschaltung (205, 215, 225, 235) umfasst, um während des hohen Zustands eines zweiten Taktzyklus (CK2) höchstens einen der Eingänge (9, 19, 29, 39), der die Ausführung eines Umschaltens von der entsprechenden Eingangsleitung (5, 6, 7, 8) zu der entsprechenden Ausgangsleitung (10, 20, 30, 40) anfordert, freizuhalten, derart, dass das Umschalten ausgeführt wird.
